(19) Europäisches Patentamt
European Patent Office
Office européen des brevets

(11) **EP 1 876 077 A1**

(12) **EUROPEAN PATENT APPLICATION**
published in accordance with Art. 153(4) EPC

(43) Date of publication:
**09.01.2008 Bulletin 2008/02**

(51) Int Cl.:
*B60T 8/1755* *(2006.01)*  *B60W 10/04* *(2006.01)*
*B60W 10/08* *(2006.01)*  *B60W 10/18* *(2006.01)*
*B60W 30/02* *(2006.01)*

(21) Application number: **06728584.1**

(22) Date of filing: **24.02.2006**

(86) International application number:
**PCT/JP2006/304022**

(87) International publication number:
**WO 2006/093241 (08.09.2006 Gazette 2006/36)**

(84) Designated Contracting States:
**DE ES FR GB IT**

(30) Priority: **01.03.2005 JP 2005056490**

(71) Applicant: **Toyota Jidosha Kabushiki Kaisha Toyota-shi, Aichi-ken, 471-8571 (JP)**

(72) Inventors:
• **MAEDA, Yoshinori**
  **Toyota-shi, Aichi 471-8571 (JP)**
• **OKUMURA, Kazuya**
  **Toyota-shi, Aichi 471-8571 (JP)**
• **TSUCHIDA, Michitaka**
  **Toyota-shi, Aichi 471-8571 (JP)**

• **URAGAMI, Yoshio**
  **Toyota-shi, Aichi 471-8571 (JP)**
• **YOSHIZUE, Kensuke**
  **, Toyota-shi, Aichi, 4718571 (JP)**
• **ANDO, Satoshi; Toyota Communication Syst. Co. Ltd.**
  **13-3, Higashi Sakura, 1-ch (JP)**
• **SUGIYAMA, Koji; Toyota Communication Syst. Co Ltd.**
  **13-3, Higashi Sakura, 1-ch (JP)**

(74) Representative: **Harris, Ian Richard**
  **D Young & Co**
  **120 Holborn**
  **London EC1N 2DY (GB)**

(54) **BRAKING-DRIVING FORCE CONTROL DEVICE OF VEHICLE**

(57)    When either one of a vehicle target braking/driving force and a target yaw moment cannot be achieved by a braking/driving forces of wheels, a distribution ratio is calculated to be a small value as a value indicating an acceleration or deceleration operation by a driver increases, and to be a great value as a value indicating a steering operation by a driver increases, for example. A straight line closest to a point of the target braking/driving force and the target yaw moment is specified, among sides of a quadrangle or hexagon indicating a range of the braking/driving force and yaw moment attainable by the braking/driving forces of the wheels in a rectangular coordinate of the braking/driving force and the vehicle yaw moment. The value of the coordinate at the target point, which is an internally dividing point of the straight line based upon the distribution ratio, is defined as the target braking/driving force after the modification and the target yaw moment after the modification, whereby the target braking/driving force and the target yaw moment are modified with the ratio based upon the condition of the driving operation by a driver.

FIG.3

```
                    ( Start )
S10      Reading signal
S20      Calculating target braking/
         driving force Fvn and target yaw moment Mvn
S30      Calculating maximum driving force Fvdmax, maximum braking
         force Fvbmax, maximum yaw moments Mvlmax, Mvrmax
S40      Are Fvn and Fvdmax        No
         within attainable range?
           Yes
                              S60  Calculating distribution
                                   ratio K (FIG. 6)
                              S80  Specifying straight
                                   line L (FIG. 5)
                              S90  Calculating vector
                                   components Zx, Zy (FIG. 5)
S50  Fvt=Fvn        S100  Calculating target braking/driving
     Mvt=Mvn              force Fvt and target yaw moment Mvt
                          after modification (FIG. 5)
S200     Calculating target braking/
         driving forces Fwxti of wheels
S210     Outputting target friction
         braking forces Fwbti of wheels
S220     Executing braking/
         driving force control
                   ( Return )
```

## Description

Technical Field

The present invention relates to a vehicle braking/driving force control apparatus, and more particularly to a vehicle braking/driving force control apparatus that controls braking/driving force of each wheel.

Background Art

As one of braking/driving force control apparatuses for a vehicle, such as an automobile, there has conventionally been known a driving force control apparatus, as disclosed in Japanese Unexamined Patent Application No. HE19-309357 for example, for performing a distribution control of driving force applied to left and right wheels so as to exert a required yaw moment to a vehicle. Further, there has already been known a braking force control apparatus that controls a vehicle braking/driving force and yaw moment by controlling braking forces of wheels so as to secure a vehicle running stability. This braking/driving force control apparatus can enhance running stability of a vehicle.

In general, the vehicle braking/driving force and yaw moment can be controlled through the control of the braking/driving forces of the wheels. However, there is a limitation in the braking/driving force that can be generated by each wheel. Therefore, there may be the case in which the braking/driving force and/or yaw moment required to the vehicle exceeds the value attainable by the control of the braking/driving forces of the wheels. This situation is not considered in the above-mentioned conventional braking/driving force control apparatus, and it is necessary to make an improvement on this point.

Disclosure of the Invention

The present invention had been accomplished in view of the circumstance described above in the conventional vehicle braking/driving force control apparatus that is configured to control braking/driving force and yaw moment of the vehicle through the control of the braking/driving forces of wheels, and the main subject of the present invention is to achieve a braking/driving force and yaw moment, which are as closer to the braking/driving force and the yaw moment required to the vehicle as possible and are suitable for the condition of a driving operation by a driver, within the ranges of the braking/driving forces that can be generated by the wheels, through the control of the braking/driving forces of the wheels such that the vehicle braking/driving force and the yaw moment become values, which are as closer to the braking/driving force and yaw moment required to the vehicle and are suitable for the condition of the driving operation by a driver, within the ranges of the braking/driving forces that can be generated by the wheels.

The above-mentioned main subject can be achieved by a vehicle braking/driving force control apparatus comprising braking/driving force applying means that can apply braking/driving forces to wheels; means for detecting an amount of driving operation by an occupant; means for calculating a vehicle target braking/driving force and a vehicle target yaw moment, which should be generated by the braking/driving forces of the wheels, on the basis of at least the amount of the driving operation by the occupant; and control means for controlling the braking/driving force applied to each wheel by the braking/driving force applying means such that, when the vehicle target braking/driving force and/or the vehicle target yaw moment cannot be achieved by the braking/driving forces of the wheels, the target braking/driving force and/or the target yaw moment is modified be increased or decreased to take values attainable by the braking/driving forces of the wheels, and the vehicle braking/driving force and the yaw moment by the braking/driving forces of the wheels become the target braking/driving force after the modification and the target yaw moment after the modification, wherein the control means is configured to determine a ratio of the modification to the target braking/driving force and the target yaw moment on the basis of the condition of the driving operation by a driver.

According to this configuration, even in case where the target braking/driving force and/or the target yaw moment cannot be achieved by the braking/driving forces of the wheels, a braking/driving force and yaw moment, which are as closer to the braking/driving force and the yaw moment required to the vehicle as possible and suitable for the condition of the driving operation by a driver, can be achieved within the rangse of the braking/driving forces that can be generated by the wheels.

In the above-mentioned configuration, the control means may modifies to decrease the target braking/driving force and/or the target yaw moment such that the target braking/driving force after the modification and the target yaw moment after the modification become the values attainable by the braking/driving forces of the wheels.

According to this configuration, it can surely be prevented that the magnitude of the target braking/driving force and/or the magnitude of the target yaw moment excessively increases.

In the above-described configuration, the control means may determine a straight line, which is the closest to a point indicating the target braking/driving force and the target yaw moment, among lines indicating the maximum values of the magnitude of the vehicle braking/driving force and the magnitude of the vehicle yaw moment by the braking/driving forces of the wheels, in a rectangular coordinate with the vehicle braking/driving force and the vehicle yaw moment as coordinate axis, set the value at the target point as the target braking/driving force after the modification and the target yaw moment after the modification with an internally dividing point of the straight line defined as the target point, and determine the ratio of the interior division of the straight line on the basis of the condition of the driving operation by a driver.

According to this configuration, the target braking/driving force after the modification and the target yaw moment after the modification can be set to the values that are as closer to the braking/driving force and yaw moment required to the vehicle as possible and suitable for the condition of the driving operation by a driver.

In the above-mentioned configuration, the control means may define, as the target point, the internally dividing point of the straight line within the range where the magnitude of the braking/driving force is not more than the target braking/driving force, when the magnitude of the target braking/driving force exceeds the maximum value of the braking/driving force attainable by the braking/driving forces of the wheels.

This configuration can surely prevent that the magnitude of the target braking/driving force excessively increases, and achieve that the target braking/driving force after the modification and the target yaw moment after the modification become the values that are as closer to the braking/driving force and yaw moment required to the vehicle as possible and suitable for the condition of the driving operation by a driver.

In the above-mentioned configuration, the control means may define, as the target point, the internally dividing point of the straight line within the range where the magnitude of the yaw moment is not more than the target yaw moment, when the magnitude of the target yaw moment exceeds the maximum value of the yaw moment attainable by the braking/driving forces of the wheels.

This configuration can surely prevent that the magnitude of the target yaw moment excessively increases, and achieve that the target braking/driving force after the modification and the target yaw moment after the modification become the values that are as closer to the braking/driving force and yaw moment required to the vehicle as possible and suitable for the condition of the driving operation by a driver.

In the above-mentioned configuration, the condition of the driving operation by a driver may be a condition of an acceleration or deceleration operation, and a condition of a steering operation.

This configuration can achieve that the target braking/driving force after the modification and the target yaw moment after the modification become the values that are as closer to the braking/driving force and yaw moment required to the vehicle as possible and suitable for the condition of the driving operation by a driver, according to the acceleration or deceleration operation and steering operation by a driver.

In the above-mentioned configuration, the control means may determine the ratio of the modification by using a neural network to which a value indicating the condition of the driving operation by a driver is inputted.

According to this configuration, the ratio of the cmodification can easily and surely be determined to a value according to the acceleration or deceleration operation and the steering operation by a driver.

In the above-mentioned configuration, the means for calculating a vehicle target braking/driving force and a vehicle target yaw moment may calculate the vehicle target braking/driving force and the vehicle target total yaw moment for causing the vehicle to stably run on the basis of at least the amount of the driving operation by an occupant, estimate a vehicle turning yaw moment due to a lateral force of each wheel on the basis of at least the amount of the driving operation by the occupant, and calculate the vehicle target yaw moment by subtracting the turning yaw moment from the target total yaw moment.

With this configuration, the vehicle target braking/driving force and the vehicle target yaw moment that should be generated by the braking/driving forces of the wheels can be surely and correctly calculated in just proportion on the basis of at least the amount of the driving operation by an occupant.

In the above-mentioned configurations, the lines indicating the greatest values of the vehicle braking/driving force and the vehicle yaw moment may be determined by the greatest value of the vehicle driving force, the greatest value of the vehicle braking force, the greatest value of the vehicle yaw moment in the leftward turning direction and the greatest value of the vehicle yaw moment in the rightward turning direction.

In the above-mentioned configurations, the lines indicating the greatest values of the vehicle braking/driving force and the vehicle yaw moment may be variably set in accordance with a road friction coefficient.

In the above-mentioned configuration, the condition of the acceleration or deceleration operation may be determined on the basis of the amount of the acceleration operation, the rate of change of the amount of the acceleration operation, the amount of braking operation, and the rate of change of the amount of the braking operation.

In the above-mentioned configuration, the condition of the steering operation may be determined on the basis of the amount of the steering operation and the rate of change of the amount of the steering operation.

In the above-mentioned configurations, the means for calculating the vehicle target braking/driving force and the vehicle target yaw moment may calculate a vehicle target longitudinal acceleration and a vehicle target yaw rate for stably running the vehicle on the basis of at least the amount of the driving operation by an occupant, and calculate the vehicle target driving/braking force and the vehicle target total yaw moment on the basis of the vehicle target longitudinal acceleration and the vehicle target yaw rate, respectively.

In the above-mentioned configurations, the control means may calculate the target braking/driving force of each wheel on the basis of the vehicle target braking/driving force, the vehicle target yaw moment, and the distribution ratio of the braking/driving force to the front and rear wheels, and control the braking/driving force applied to each wheel on the basis of the target braking/driving force of each wheel.

In the above-mentioned configurations, depending upon the values of the vehicle target braking/driving force and/or the target yaw moment, the vehicle target braking/driving force and/or the target yaw moment may not be modified to be increased or decreased with the ratio of the modification, but the vehicle target braking/driving force after the modification and the vehicle target yaw moment after the modification may be set to a specific value attainable by the braking/driving forces of the wheels.

In the above-mentioned configurations, the braking/driving force applying means may comprise means for applying driving force to each wheel independently, and means for applying braking force to each wheel independently.

In the above-mentioned configurations, the braking/driving force applying means may comprise means for applying common driving force to the right and left wheels, means for controlling the distribution of the driving force to the right and left wheels, and means for applying braking force to each wheel independently.

In the above-mentioned configurations, the means for applying driving force may comprise means for applying common driving force to the right and left front wheels, and means for applying common driving force to the right and left rear wheels.

In the above-mentioned configurations, the means for applying driving force may comprise means for applying common driving force to the right and left front wheels and the right and left rear wheels, means for controlling the distribution of the driving force to the front and rear wheels, means for controlling the distribution of the driving force to the right and left front wheels, and means for controlling the distribution of the driving force to the right and left rear wheels.

In the above-mentioned configurations, the means for applying driving force may comprise an electric motor generator.

In the above-mentioned configurations, the electric motor generator may perform regenerative braking upon the braking.

BRIEF DESCRIPTION OF THE DRAWINGS

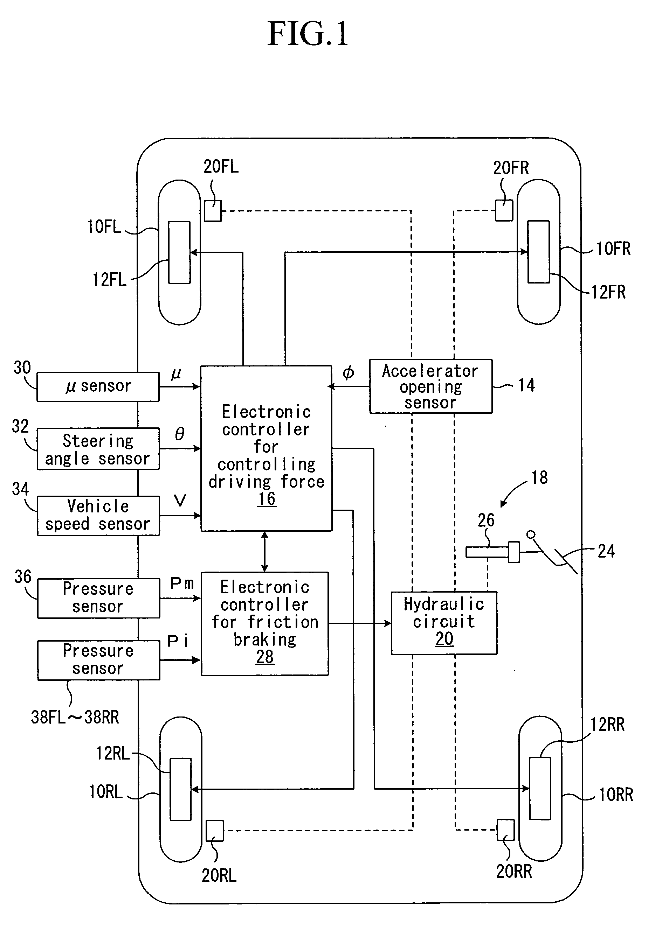

FIG. 1 is a schematic block diagram showing a braking/driving force control apparatus applied to a four-wheel-drive vehicle of a wheel-in-motor type according to a first embodiment of the present invention;

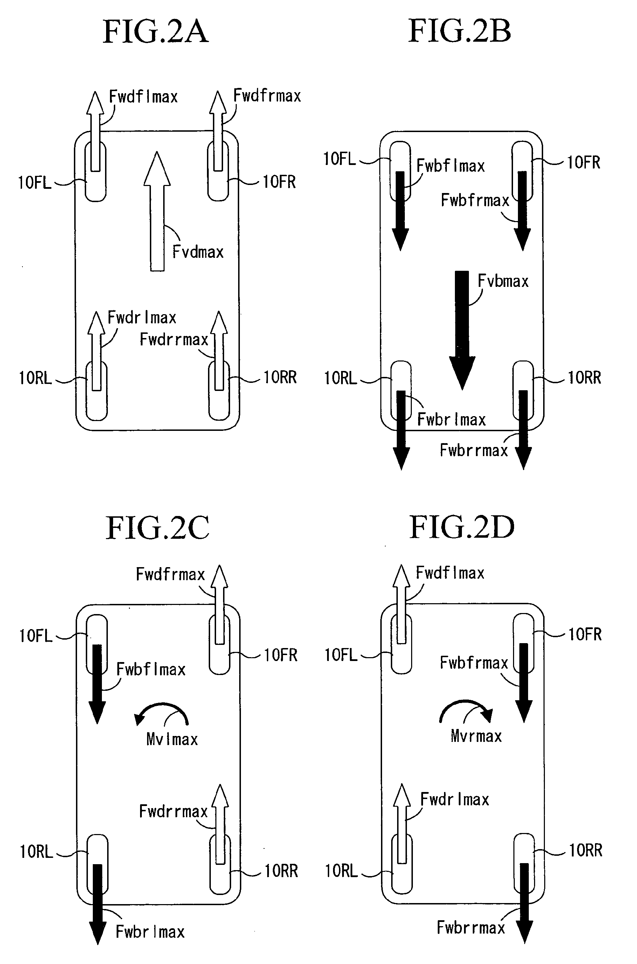

FIG. 2 is an explanatory view for explaining various cases of the relationship between braking/driving force of each wheel and vehicle braking/driving force and the relationship between braking/driving force of each wheel and yaw moment;

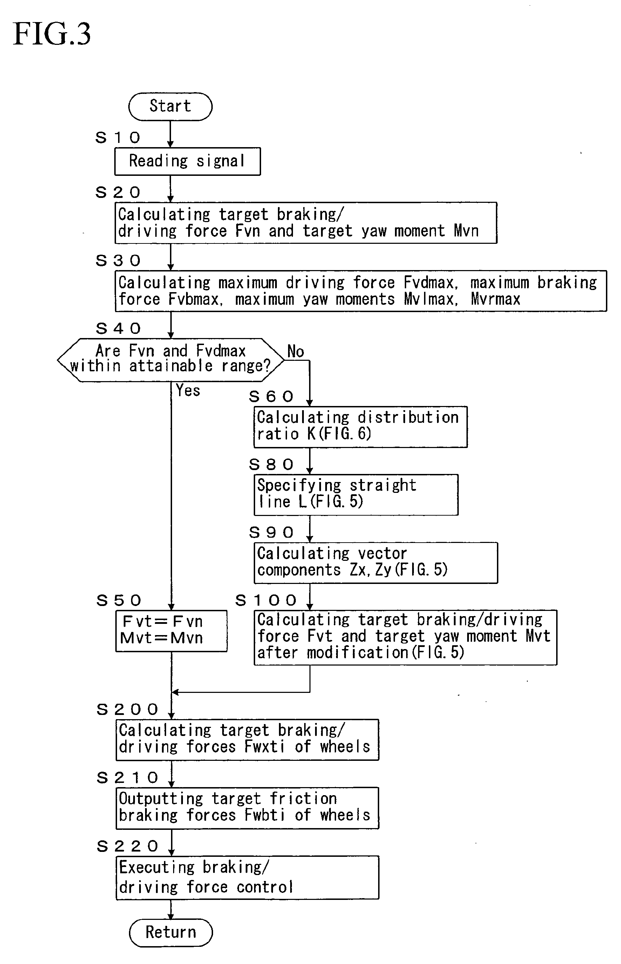

FIG. 3 is a flowchart showing a braking/driving force control routine executed by an electronic controller for controlling driving force in the first embodiment;

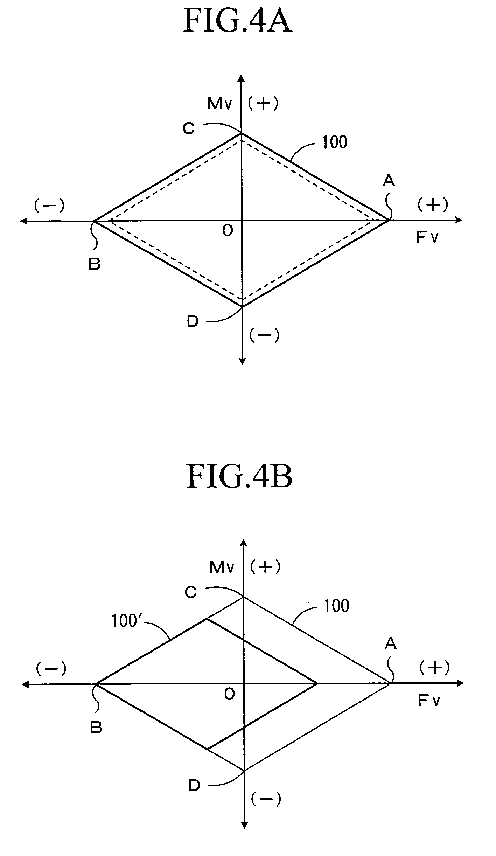

FIG. 4A is a graph showing the range, that can be achieved by the braking/driving force of each wheel, of the vehicle braking/driving force and vehicle yaw moment;

FIG. 4B is an explanatory view showing the range, that can be achieved by the control of the braking/driving force of each wheel, of the vehicle target braking/driving force Fvn and the vehicle target yaw moment Mvn in the vehicle having a driving source provided only at the right and left front wheels or at the right and left rear wheels in the first embodiment;

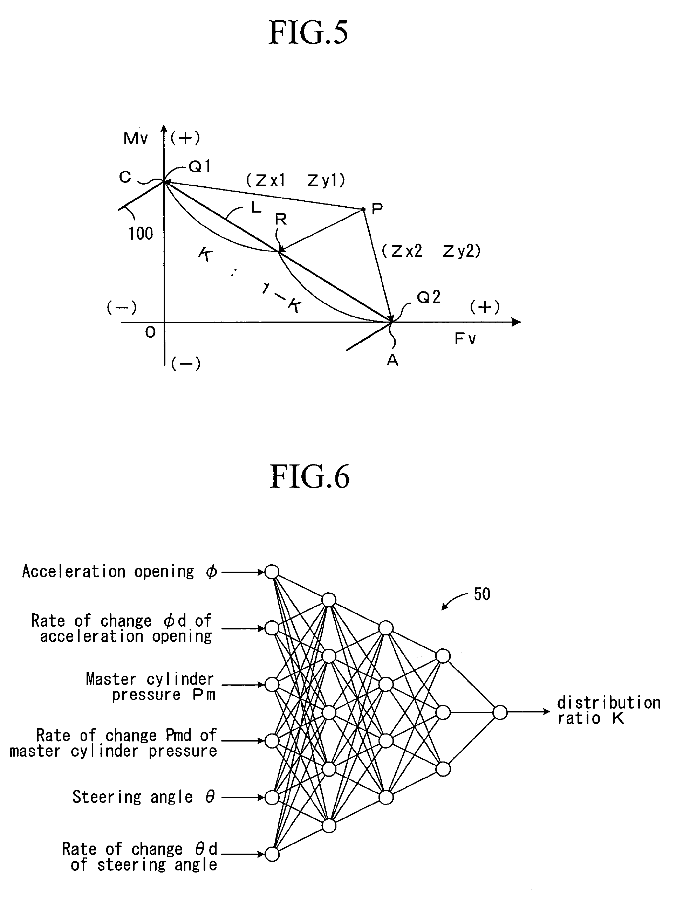

FIG. 5 is an explanatory view for showing, in the first embodiment, a manner of specifying a straight line L, which is the closest to a vehicle target braking/driving force Fvn and vehicle target yaw moment Mvn, when a vehicle target braking/driving force Fvn and a vehicle target yaw moment Mvn are outside the range attainable by the control of the braking/driving forces of the wheels, and a manner of setting the coordinate of an internally dividing point Q of the straight line L to a vehicle target braking/driving force Fvt after the modification and a vehicle target yaw moment Mvt after the modification;

FIG. 6 is an explanatory view showing a neural network to which a value indicating a condition of an acceleration or deceleration operation by a driver and a value indicating a condition of a steering operation by a driver are inputted, and which outputs a distribution ratio K for calculating the vehicle target braking/driving force Fvt after the modification and the vehicle target yaw moment Mvt after the modification;

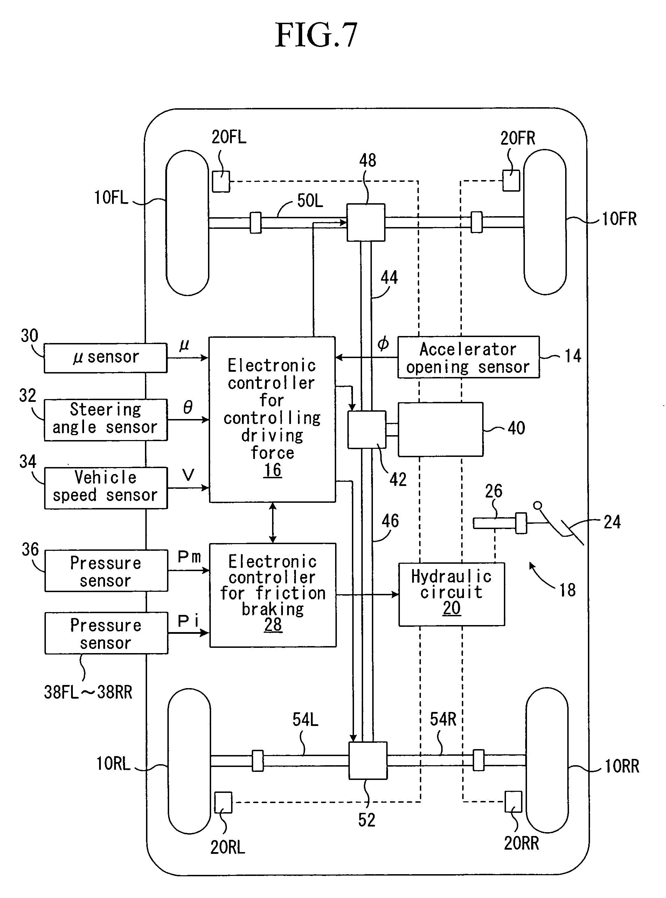

FIG. 7 is a schematic block diagram showing a vehicle braking/driving force control apparatus applied to a four-wheel-drive vehicle in which driving force and regenerative braking force from a single electric motor generator, which is common to four wheels, are controlled so as to be distributed to the four wheels according to a second embodiment of the present invention;

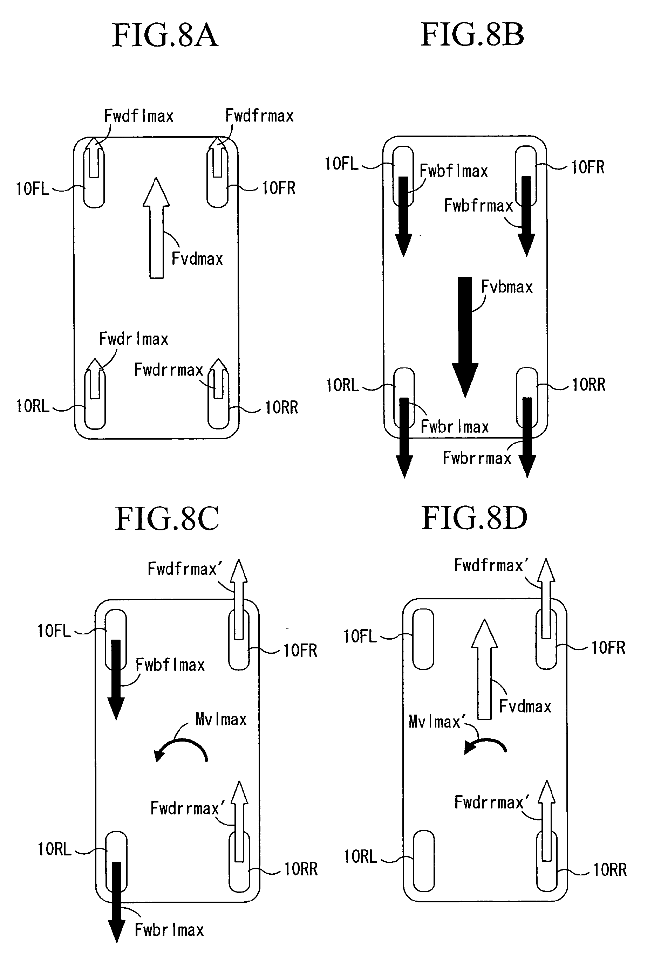

FIG. 8 is an explanatory view for explaining various cases of the relationship between braking/driving force of each wheel and vehicle braking/driving force and the relationship between braking/driving force of each wheel and vehicle yaw moment in the second embodiment;

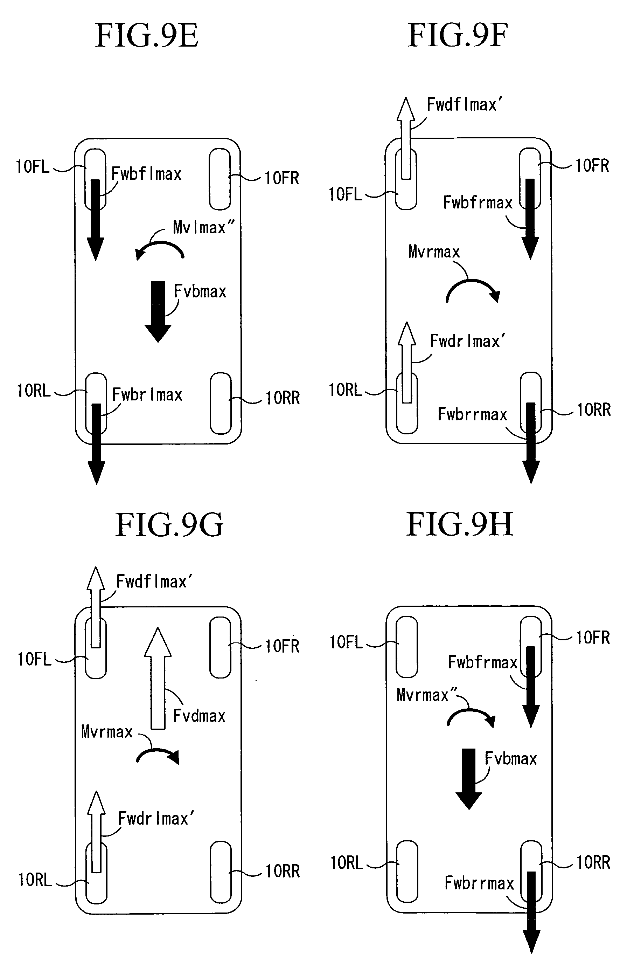

FIG. 9 is an explanatory view for explaining other various cases of the relationship between braking/driving force of each wheel and vehicle braking/driving force and the relationship between braking/driving force of each wheel and vehicle yaw moment in the second embodiment;

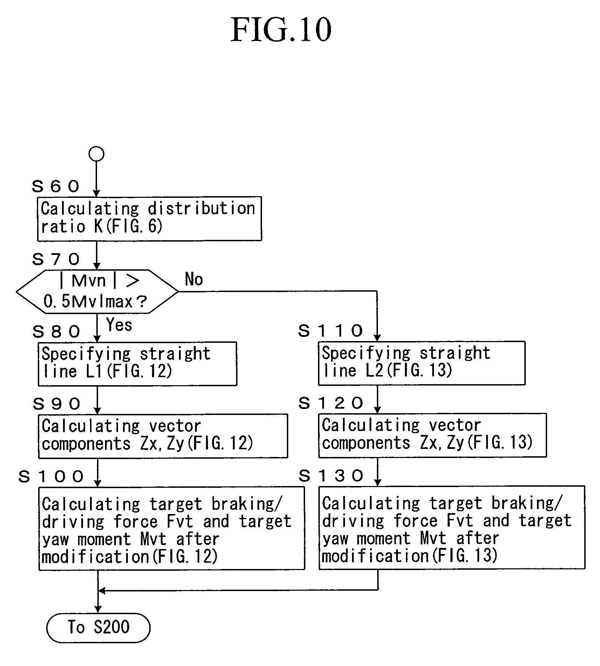

FIG. 10 is a flowchart showing a braking/driving force control routine executed by the electronic controller for controlling driving force in the second embodiment;

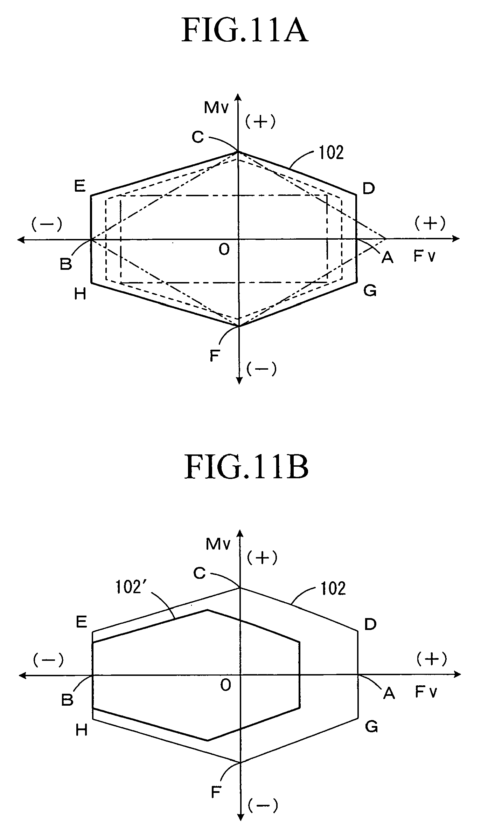

FIG. 11A is a graph showing the range, that can be achieved by the braking/driving force of each wheel, of the vehicle braking/driving force and vehicle yaw moment according to the second embodiment;

FIG. 11B is an explanatory view showing the range, that can be achieved by the control of the braking/driving force of each wheel, of the vehicle target braking/driving force Fvn and the vehicle target yaw moment Mvn in the vehicle having a driving source provided only at the right and left front wheels or at the right and left rear wheels in the second embodiment;

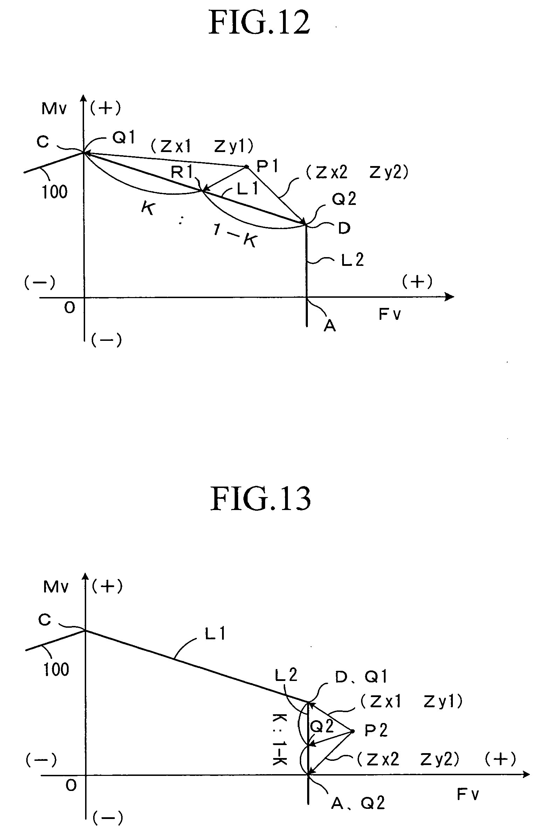

FIG. 12 is an explanatory view for showing, in the second embodiment, a manner of specifying a straight line L1, which is the closest to a vehicle target braking/driving force Fvn and vehicle target yaw moment Mvn, when a vehicle target braking/driving force Fvn and a vehicle target yaw moment Mvn are outside the range attainable by the control of the braking/driving force of the wheels, and a manner of setting the coordinate of an internally dividing point Q1 of the straight line L1 to a vehicle target braking/driving force Fvt after the modification and a vehicle target yaw moment Mvt after the modification;

FIG. 13 is an explanatory view for showing, in the second embodiment, a manner of specifying a straight line L2, which is the closest to a vehicle target braking/driving force Fvn and vehicle target yaw moment Mvn, when a vehicle target braking/driving force Fvn and a vehicle target yaw moment Mvn are outside the range attainable by the control of the braking/driving forces of the wheels, and a manner of setting the coordinate of an internally dividing point Q2 of the straight line L2 to a vehicle target braking/driving force Fvt after the modification and a vehicle target yaw moment Mvt after the modification;

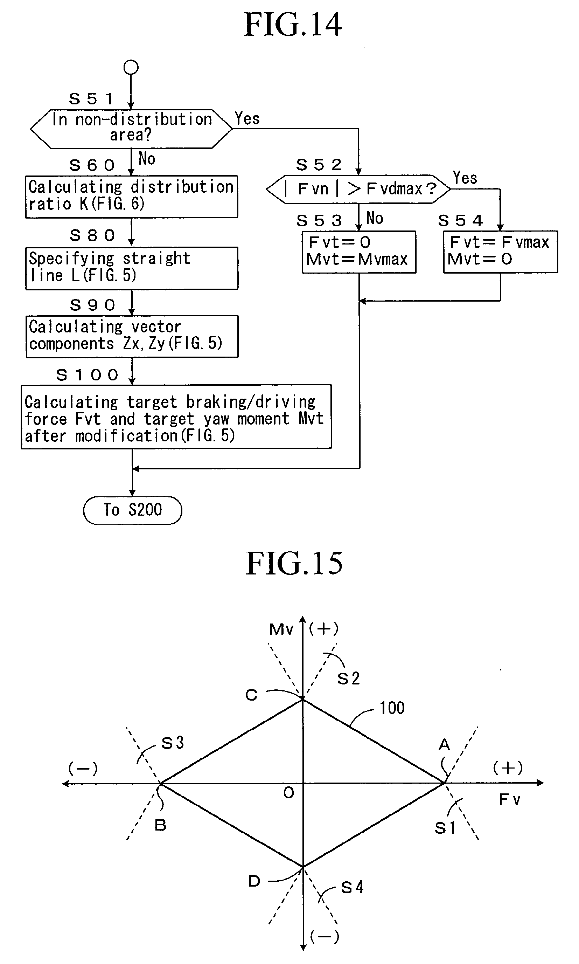

FIG. 14 is a flowchart showing an main part of a braking/driving force control routine in a third embodiment of a vehicle braking/driving force control apparatus that is applied to a four-wheel-drive vehicle of a wheel-in-motor type and is made as an modified example of the first embodiment;

FIG. 15 is an explanatory view showing areas S1 to S4 where the calculation of the vehicle target braking/driving force Fvt after the modification and the vehicle target yaw moment Mvt after the modification by the internally dividing point R of the straight line L on the basis of the distribution ratio K is not executed, when the vehicle target braking/driving force Fvn and the vehicle target yaw moment Mvn are outside the range attainable by the control of the braking/driving forces of the wheels in the third embodiment;

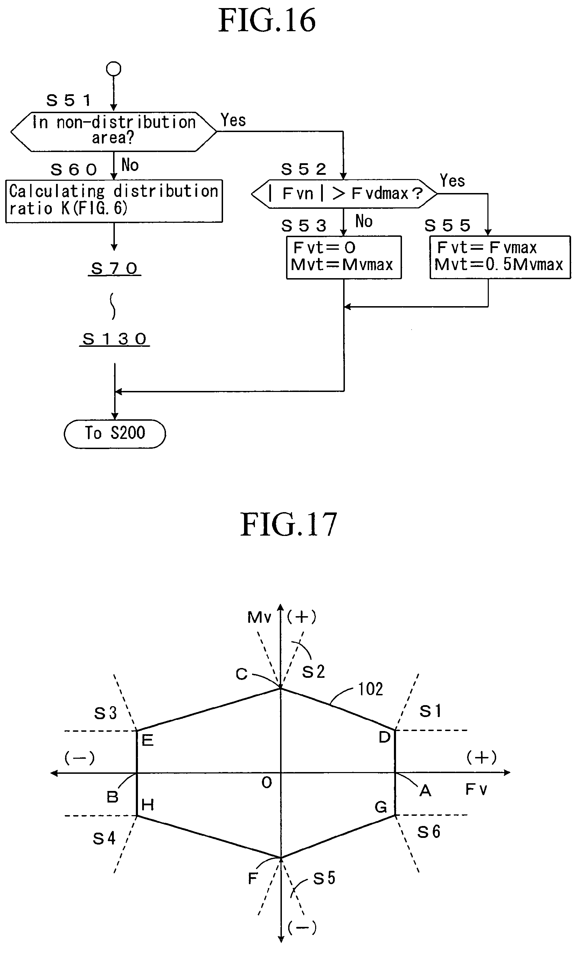

FIG. 16 is a flowchart showing an main part of a braking/driving force control routine in a fourth embodiment of a vehicle braking/driving force control apparatus that is applied to a four-wheel-drive vehicle, in which driving force and regenerative braking force from a single electric motor generator that is common to four wheels are controlled so as to be distributed to front and rear wheels and right and left wheels and is made as an modified example of the second embodiment;

FIG. 17 is an explanatory view showing areas S1 to S6 where the calculation of the vehicle target braking/driving force Fvt after the modification and the vehicle target yaw moment Mvt after the modification by the internally dividing point R1 or R2 of the straight line L1 or L2 on the basis of the distribution ratio K is not executed, when the vehicle target braking/driving force Fvn and the vehicle target yaw moment Mvn are outside the range attainable by the control of the braking/driving forces of the wheels in the third embodiment; and

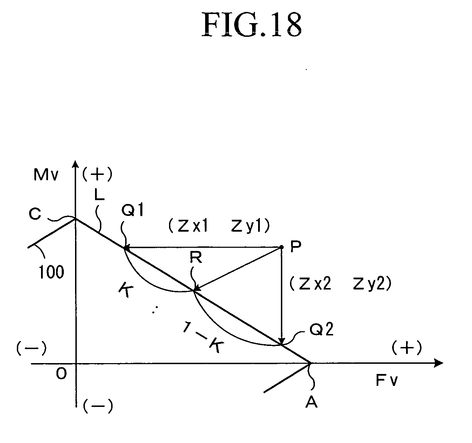

FIG. 18 is an explanatory view showing an modified example in which the vehicle target braking/driving force Fvt and the vehicle target yaw moment Mvt are calculated within the range not more than the vehicle target braking/driving force Fvn and/or the vehicle target yaw moment Mvn.

Best Mode for Carrying out the Invention

Some preferred embodiments of the present invention will be explained in detail with reference to the accompanying drawings.

FIRST EMBODIMENT

FIG. 1 is a schematic block diagram showing a braking/driving force control apparatus applied to a four-wheel-drive vehicle of a wheel-in-motor type according to a first embodiment of the present invention.

In FIG. 1, numerals 10FL and 10FR respectively represent left and right front wheels that are steering wheels, and numerals 10RL and 10RR respectively represent left and right rear wheels that are non-steering wheels. Electric motor generators 12FL and 12FR that are in-wheel motors are incorporated into the left and right front wheels 10FL and 10FR respectively, whereby the left and right front wheels 10FL and 10FR are driven by the electric motor generators 12FL and 12FR. The electric motor generators 12FL and 12FR also function as regenerative electric generators for each of the left and right front wheels upon the braking, so that they generate regenerative braking force.

Similarly, electric motor generators 12RL and 12RR that are in-wheel motors are incorporated into the left and right rear wheels 10RL and 10RR respectively, whereby the left and right front wheels 10RL and 10RR are driven by the electric motor generators 12RL and 12RR. The electric motor generators 12RL and 12RR also function as regenerative electric generators for each of the left and right rear wheels upon the braking, so that they generate regenerative braking force.

The driving force from each of the electric motor generators 12FL to 12RR is controlled by an electronic controller 16 for controlling driving force on the basis of an accelerator opening $\phi$ that is a step-on amount of an accelerator pedal, that is not shown in FIG. 1, detected by an accelerator opening sensor 14. The regenerative braking force from each of the electric motor generators 12FL to 12RR is also controlled by the electronic controller 16 for controlling driving force.

Although not shown in FIG. 1 in detail, the electronic controller 16 for controlling driving force is composed of a microcomputer and a driving circuit, wherein the microcomputer may have a general configuration to include, for example, a CPU, ROM, RAM, and input/output port device, those of which are interconnected with one another via a bi-directional common bus. In a normal running, electric power charged in a battery, which is not shown in FIG. 1, is supplied to each of the electric motor generators 12FL to 12RR, and upon the deceleration and braking of the vehicle, the electric power generated by the regenerative braking by each of the electric motor generators 12FL to 12RR is charged to the battery via the driving circuit.

The friction braking forces of the left and right front wheels 10FL and 10FR and the left and right rear wheels 10RL and 10RR are controlled by controlling braking pressures of corresponding wheel cylinders 22FL, 22FR, 22RL and 22RR by a hydraulic circuit 20 in a friction braking device 18. Although not shown in the figure, the hydraulic circuit 20 includes a reservoir, oil pump, and other various valve devices. In a normal situation, the braking pressure of each wheel cylinder is controlled in accordance with the step-on amount of the brake pedal 24 by a driver and the pressure of a master cylinder 26 that is driven in accordance with the step-on operation of the brake pedal 24. It is controlled as necessary through the control of the oil pump or various valve devices by an electronic controller 28 for controlling braking force, regardless of the step-on amount of the brake pedal 24 by a driver.

Although not shown in FIG. 1 in detail, the electronic controller 18 for controlling braking force is also composed of a microcomputer and a driving circuit, wherein the microcomputer may have a general configuration to include, for example, a CPU, ROM, RAM, and input/output port device, those of which are interconnected with one another via a bi-directional common bus.

Inputted to the electronic controller 16 for controlling driving force are a signal indicating a road friction coefficient $\mu$ from a $\mu$ sensor 30; a signal indicating a steering angle $\theta$ from a steering angle sensor 32; and a signal indicating a vehicle speed V from a vehicle speed sensor 34, in addition to the signal indicating the accelerator opening $\phi$ from the accelerator opening sensor 14. Inputted to the electronic controller 28 for controlling braking force are a signal indicating a master cylinder pressure Pm from a pressure sensor 36 and signals indicating braking pressures (wheel cylinder pressures) Pbi (i = fl, fr, rl, rr) of corresponding wheels from pressure sensors 38FL to 38RR. The electronic controller 16 for controlling driving force and the electronic controller 28 for controlling braking force exchange signals with each other according to need. Note that the steering angle sensor 32 detects a steering angle $\theta$ with the leftward turning direction of the vehicle defined as a positive.

The electronic controller 16 for controlling driving force calculates a vehicle target longitudinal acceleration Gxt on the basis of the accelerator opening $\phi$ and the master cylinder pressure Pm, which indicate an amount of acceleration/deceleration operation by a driver, and calculates a target yaw rate $\gamma t$ of the vehicle on the basis of the steering angle $\theta$, which is an amount of steering operation by a driver, and the vehicle speed V through a manner well-known in this technical field. Then, the electronic controller 16 for controlling driving force calculates a target braking/driving force Fvn that is required to the vehicle on the basis of the vehicle target longitudinal acceleration Gxt, and calculates a target total yaw moment Mvnt required to the vehicle on the basis of the vehicle target yaw rate $\gamma t$.

The electronic controller 16 for controlling driving force calculates the vehicle slip angle $\beta$ with a manner well-known in this technical field, calculates the slip angle $\alpha$ of the left and right front wheels on the basis of the vehicle slip angle $\beta$ and the steering angle $\theta$, and calculates a vehicle turning yaw moment Ms due to a lateral force of each wheel on the basis of the slip angle $\alpha$. Then, the electronic controller 16 for controlling driving force calculates the value obtained by subtracting the turning yaw moment Ms from the vehicle target total yaw moment Mvnt as the vehicle target yaw moment Mvn, required to the vehicle, through the control of the braking/driving force of each wheel.

The electronic controller 16 for controlling driving force further calculates the vehicle maximum driving force Fvdmax and the vehicle maximum braking force Fvbmax attainable by the braking/driving forces of the wheels on the basis of the road friction coefficient $\mu$, and calculates the vehicle maximum yaw moment Mvlmax in the leftward turning direction and the vehicle maximum yaw moment Mvrmax in the rightward turning direction attainable by the braking/driving forces of the wheels on the basis of the road friction coefficient $\mu$.

As shown in FIG. 2A, supposing that the vertical load and the friction coefficients to the road surface of the wheels are the same, and the sizes of the friction circles of the wheels are the same, the vehicle maximum driving force Fvdmax under the condition where the yaw moment by the braking/driving forces of the wheels is not acted on the vehicle is achieved when the braking/driving forces Fwxfl and Fwxfr of the left and right front wheels 10FL and 10FR are the maximum driving forces Fwdflmax and Fwdfrmax and the braking/driving forces Fwxrl and Fwxrr of the left and right rear wheels 10RL and 10RR are the maximum driving forces Fwdrlmax and Fwdrrmax. Similarly, as shown in FIG. 2B, the vehicle maximum braking force Fvbmax under the condition where the yaw moment by the braking/driving forces of the wheels is not acted on the vehicle is achieved when the braking/driving forces Fwxfl and Fwxfr of the left and right front wheels 10FL and 10FR are the maximum braking forces Fwbflmax and Fwbfrmax and the braking/driving forces Fwxrl and Fwxrr of the left and right rear wheels 10RL and 10RR are the maximum braking forces Fwbrlmax and Fwbrrmax.

As shown in FIG. 2C, the vehicle maximum yaw moment Mvlmax in the leftward turning direction under the condition where the longitudinal force by the braking/driving forces of the wheels is not acted on the vehicle is achieved when the braking/driving forces Fwxfl and Fwxrl of the front left and rear left wheels 10FL and 10RL are the maximum braking forces Fwbflmax and Fwbrlmax and the braking/driving forces Fwxfr and Fwxrr of the front right and rear right wheels 10FR and 10RR are the maximum driving forces Fwdfrmax and Fwdrrmax. Similarly, as shown in FIG. 2D, the vehicle maximum yaw moment Mvrmax in the rightward turning direction under the condition where the longitudinal force by the braking/driving forces of the wheels is not acted on the vehicle is achieved when the braking/driving forces Fwxfl and Fwxrl of the front left and rear left wheels 10FL and 10RL are the maximum driving forces Fwdflmax and Fwdrlmax and the braking/driving forces Fwxfr and Fwxrr of the front right and rear right wheels 10FR and 10RR are the maximum braking forces Fwbfrmax and Fwbrrmax.

In case where the output torque of each of the electric motor generators 12FL to 12RR is sufficiently great, the maximum driving force and the maximum braking force of each wheel are determined by the road friction coefficient $\mu$, so that, with the vehicle accelerating direction and vehicle leftward turning direction defined as positive, the following relationships are established between the maximum driving force and the maximum braking force of each wheel, the vehicle maximum driving force and the vehicle maximum braking force, and the vehicle maximum yaw moment in the leftward turning direction and the vehicle maximum yaw moment in the rightward turning direction.

$$\text{Fwdflmax} = \text{Fwdfrmax} = -\text{Fwbflmax} = -\text{Fwbfrmax}$$

$$\text{Fwdrlmax} = \text{Fwdrrmax} = -\text{Fwbrlmax} = -\text{Fwbrrmax}$$

$$\text{Fvdmax} = -\text{Fvbmax}$$

$$\text{Mvlmax} = -\text{Mvrmax}$$

Since the maximum driving force Fwdimax and the maximum braking force Fwbimax (i = fl, fr, rl, rr) of each wheel are determined by the road friction coefficient $\mu$, the vehicle maximum driving force Fvdmax, vehicle maximum braking force Fvbmax, vehicle maximum yaw moment Mvlmax in the leftward turning direction, and vehicle maximum yaw moment Mvrmax in the rightward turning direction are also determined by the road friction coefficient $\mu$. Accordingly, if the road friction coefficient $\mu$ is found, the vehicle maximum driving force Fvdmax and the other aforesaid values can be estimated.

As shown in FIG. 4A, in a rectangular coordinate with the vehicle braking/driving force Fvx as abscissa and the vehicle yaw moment Mv as ordinate, the vehicle braking/driving force Fvx and the vehicle yaw moment Mv that can be achieved by the control of the braking/driving force of each wheel take values within a diamond quadrangle 100 decided by the vehicle maximum driving force Fvdmax, vehicle maximum braking force Fvbmax, vehicle maximum yaw moment Mvlmax in the leftward turning direction, and vehicle maximum yaw moment Mvrmax in the rightward turning direction.

Notably, in FIG. 4, points A to D correspond to the cases A to D in FIG. 2, wherein the coordinates at the points A to D are (Fvdmax, 0), (Fvbmax, 0), (0, Mvlmax), and (0, Mvrmax), respectively. As shown by a broken line in FIG. 4A, the quadrangle 100 becomes small as the road friction coefficient $\mu$ decreases. Further, as the steering angle $\theta$ increases, the lateral force of front left and front right wheels, that are steering wheels, increases, so that the allowance of the longitudinal force becomes small. Therefore, the quadrangle 100 becomes small as the magnitude of the steering angle $\theta$ increases.

Supposing that the longitudinal distribution ratio of the vehicle braking/driving force Fv to the rear wheels is defined as Kr (constant of 0 < Kr < 1), and the vehicle tread is defined as Tr, the following equations 1 to 3 are established. Accordingly, the electronic controller 16 for controlling driving force sets the vehicle target braking/driving force Fvt and the vehicle target yaw moment Mvt by the control of the braking/driving forces of each wheel to the target braking/driving force Fvn and the vehicle target yaw moment Mvn, when the vehicle target braking/driving force Fvn and the vehicle target yaw moment Mvn are within the above-mentioned quadrangle 100. For example, it calculates the values satisfying the following equations 1 to 3 as the target braking/driving forces Fwxti (i = fl, fr, rl, rr) of the wheels by the least square method.

$$Fwxfl + Fwxfr + Fwxrl + Fwxrr = Fvt \qquad (1)$$

$$\{Fwxfr + Fwxrr - (Fwxfl + Fwxrl)\}Tr/2 = Mvt \qquad (2)$$

$$(Fwxfl + Fwxfr)Kr = (Fwxrl + Fwxrr)(1 - Kr) \qquad (3)$$

When the vehicle target braking/driving force Fvn and the vehicle target yaw moment Mvn are outside the range of the above-mentioned quadrangle 100, the electronic controller 16 for controlling driving force specifies a straight line L of the outer line of the quadrangle 100, which is the closest to a point P indicating the vehicle target braking/driving force Fvn and the vehicle target yaw moment Mvn, calculates a distribution ratio K (a value greater than 0 and less than 1) for determining an internally dividing point R of the straight line L by an operation of the neural network 50 shown in FIG. 6, and defines the braking/driving force Fv and the yaw moment Mv at the target point R as the vehicle target braking/driving force Fvt after the modification and the vehicle target yaw moment Mvt after the modification, with the internally dividing point R of the straight line L on the basis of the distribution ratio K employed as the target point R. Then, the electronic controller 16 for controlling driving force calculates the values satisfying the foregoing equations 1 to 3 as the target braking/driving forces Fwxti of the wheels by the least square method, for example.

In the illustrated first embodiment, inputted to the neural network 50 are an acceleration opening $\phi$, a rate of change of the acceleration opening $\phi d$, a master cylinder pressure Pm, a rate of change of the master cylinder pressure Pmd, a steering angle $\theta$, and a rate of change of the steering angle (steering angular speed) $\theta d$ which indicate a condition of a driving operation by a driver, and the neural network 50 calculates the distribution ratio K as a weight to the yaw moment. Particularly, the neural network 50 calculates the distribution ratio K to be a small value, as the acceleration opening $\phi$, the rate of change of the acceleration opening $\phi d$, the master cylinder pressure Pm, and/or the rate of change of the master cylinder pressure Pmd which indicate a condition of an acceleration or deceleration operation by a driver are great, while it calculates the distribution ratio K to be a great value, as the magnitude of the steering angle $\theta$ and/or the magnitude of the rate of change of the steering angle $\theta d$ which indicate a condition of steering by a driver are great.

When the target braking/driving force Fwxti of each wheel takes a positive value that means it is a driving force, the electronic controller 16 for controlling driving force sets the target friction braking force Fwbti and the target regenerative braking force Fwrti (i = fl, fr, rl, rr) of each wheel to zero, outputs the signals indicating the target friction braking forces Fwbti to the electronic controller 28 for controlling braking force, sets the target driving force Fwdti (i = fl, fr, rl, rr) of each wheel to the associated target braking/driving force Fwxti, calculates the target driving currents Iti (i = fl, fr, rl, rr) to the electric motor generators 12FL to 12RR by unillustrated maps or functions on the basis of the target driving forces Fwdti, and controls the driving currents applied to the electric motor generators 12FL to 12RR on the basis of the target driving currents Iti, thereby controlling the driving force of each wheel such that the braking/driving force Fwxi of each wheel becomes the associated target braking/driving force Fwxti.

On the other hand, when the target braking/driving forces Fwxti of each wheel takes a negative value which means that the target braking/driving force Fwxti is a braking force and the target braking/driving force Fwxti is not more than the maximum regenerative braking force of each wheel, the electronic controller 16 for controlling driving force sets the target driving force Fwdti and the target friction braking force Fwbti of each wheel to zero, sets the target regenerative braking force Fwrti to the target braking/driving force Fwxti, and controls the electric motor generators 12FL to 12RR such that the regenerative braking force becomes the target regenerative braking force Fwrti.

When the target braking/driving force Fwxti of each wheel takes a negative value which means that the target braking/driving force Fwxti is a braking force and the target braking/driving force Fwxti is greater than the maximum regenerative braking force of each wheel, the electronic controller 16 for controlling driving force sets the target driving force Fwdti of each wheel to zero, sets the target regenerative braking force Fwrti of each wheel to the maximum regenerative braking force Fwxrimax (i = fl, fr, rl, rr), and controls the electric motor generators 12FL to 12RR such that the regenerative braking force becomes the maximum regenerative braking force Fwxrimax. Further, it calculates the braking force that corresponds to the difference between the target braking/driving force Fwxti and the maximum regenerative braking force Fwxrimax as the target friction braking force Fwbti (i = fl, fr, rl, rr), and outputs the signals indicating the target friction braking forces Fwbti of the wheels to the electronic controller 28 for controlling braking force.

The electronic controller 28 for controlling braking force calculates the target braking pressure Pbti (i = fl, fr, rl, rr) of each wheel on the basis of the target friction braking force Fwbti of each wheel inputted from the electronic controller 16 for controlling driving force, and controls the hydraulic circuit 20 such that the braking pressure Pbi of each wheel becomes the associated target braking pressure Pbti, and the friction braking force Fwbi (i = fl, fr, rl, rr) of each wheel thereby becomes the associated target friction braking force Fwbti of each wheel.

The braking/driving force control achieved by the electronic controller 16 for controlling driving force in the first embodiment will now be explained with reference to the flowchart shown in FIG. 3. The control by the flowchart shown in FIG. 3 is started by the activation of the electronic controller 16 for controlling driving force, and it is repeatedly executed every predetermined time until an ignition switch, not shown, is turned off.

At Step 10, the signals indicating the accelerator opening $\phi$ detected by the accelerator opening sensor 14 and the like are firstly read. At Step 20, the vehicle target braking/driving force Fvn and vehicle target yaw moment Mvn that are required to the vehicle and caused by the control of the braking/driving force of each wheel are calculated in the aforesaid manner on the basis of the accelerator opening $\phi$ and the like.

At Step 30, the vehicle maximum driving force Fvdmax, vehicle maximum braking force Fvbmax, vehicle maximum yaw moment Mvlmax in the leftward turning direction, and vehicle maximum yaw moment Mvrmax in the rightward direction, attainable by the braking/driving force of each wheel, are calculated by maps or functions, not shown, on the basis of the road friction coefficient $\mu$. Specifically, the points A to D shown in FIG. 4 are specified.

At Step 40, it is determined whether or not the absolute value of the target braking/driving force Fvn is not more than the vehicle maximum driving force Fvdmax and the absolute value of the vehicle target yaw moment Mvn is not more than the vehicle maximum yaw moment Mvlmax, i.e., it is determined whether the vehicle target braking/driving force Fvn and the vehicle target yaw moment Mvn are within the range of the quadrangular 100 or not and the target braking/driving force Fvn and the target yaw moment Mvn can be achieved or not through the control of the braking/driving force of each wheel. When the negative determination is made, the program proceeds to Step 60. When the positive determination is made, the vehicle target braking/driving force Fvt and the vehicle target yaw moment Mvt after the modification are respectively set to the target braking/driving force Fvn and the target yaw moment Mvn at Step 50, and then, the program proceeds to Step 200.

At Step 60, the neural network 50 calculates the distribution ratio K in such a manner that, as the acceleration opening $\phi$, the rate of change of the acceleration opening $\phi d$, the master cylinder pressure Pm, the rate of change of the master cylinder pressure Pmd which indicate a condition of an acceleration or deceleration operation by a driver are great, the distribution ratio K becomes a small value, and as the magnitude of the steering angle $\theta$ and/or the magnitude of the rate of change of the steering angle $\theta d$ which indicate a condition of steering by a driver are great, the distribution ratio K becomes a great value.

At Step 80, the straight line L, which is the closest to the point P indicating the vehicle target braking/driving force Fvn and the vehicle target yaw moment Mvn, is specified among the outer lines of the quadrangle 100, as shown in FIG. 5. The straight line L is specified to be the segment AC when the point P that indicates the vehicle target braking/driving force Fvn and the vehicle target yaw moment Mvn is in the first quadrant in FIG. 4A, specified to be the segment BC when the point P is in the second quadrant in FIG. 4A, specified to be the segment BD when the point P is in the third quadrant in FIG. 4A, and specified to be the segment AD when the point P is in the fourth quadrant in FIG. 4A.

The coordinate at the end Q1 of the straight line L where the magnitude of the yaw moment is greater is defined as (Mvmax, 0), and the coordinate at the end Q2 where the magnitude of the yaw moment is smaller is defined as (0, Fvmax). At Step 90, the vector component (Zx1 Zy1) from the point P to the end Q1 and the vector component (Zx2 Zy2) from the point P to the end Q2 are calculated in accordance with the following equations 4 and 5, respectively. The ends Q1 and Q2 are the points C and t A, respectively when the point P is in the first quadrant in FIG. 4A, the points C and B, respectively when the point P is in the second quadrant in FIG. 4A, the points D and t A, respectively when the point P is in the third quadrant in FIG. 4A, and the points D and B, respectively when the point P is in the fourth quadrant in FIG. 4A.

$$(Zx1 \ Zy1) = (-Fvn \quad Mvmax - Mvn) \qquad (4)$$

$$(Zx2 \ Zy2) = (Fvmax - Fvn \quad -Mvn) \qquad (5)$$

At Step 100, the vehicle target braking/driving force Fvt after the modification and the vehicle target yaw moment Mvt after the modification are calculated as the values of the coordinate at the target point R, which is the internally dividing point of the straight line L based upon the distribution ratio K, in accordance with the equations 6 and 7 described below. Thereafter, the program proceeds to Step 200.

$$Fvt = Fvn + K \ (Fvmax - Fvn) + (1 - K) \ (-Mvn) \qquad (6)$$

$$Mvt = Mvn + K \ (-Fvn) + (1 - K) \ (Mvmax - Mvn) \qquad (7)$$

At Step 200, the target braking/driving force Fwxti (i = fl, fr, rl, rr) of each wheel to achieve the target braking/ driving force Fvt and the target yaw moment Mvt is calculated in the above-mentioned manner on the basis of the vehicle target braking/driving force Fvt after the modification and the vehicle target yaw moment Mvt after the modification.

At Step 210, the target friction braking force Fwbti is calculated in the aforesaid manner, and the signals indicating the target friction braking forces Fwbti are outputted to the electronic controller 28 for controlling braking force, whereby the electronic controller 28 for controlling braking force makes a control such that the friction braking force Fwbi of each wheel becomes the associated target friction braking force Fwbti.

At Step 220, each of the electric motor generators 12FL to 12RR is controlled such that the driving force Fwdi or the regenerative braking force Fwri of each wheel respectively becomes the target driving force Fwdti or the target regenerative braking force Fwrti.

According to the illustrated first embodiment, the vehicle target braking/driving force Fvn and the vehicle target yaw moment Mvn, required to the vehicle, through the control of the braking/driving forces of the wheels are calculated at Step 20, the vehicle maximum driving force Fvdmax, vehicle maximum braking force Fvbmax, vehicle maximum yaw moment Mvlmax in the leftward turning direction, and the vehicle maximum yaw moment Mvrmax in the rightward turning direction, those of which are attainable by the braking/driving forces of the wheels, are calculated at Step 30, and it is determined at Step 40 whether or not the target braking/driving force Fvn and the target yaw moment Mvn can be achieved or not through the control of the braking/driving forces of the wheels.

When it is determined at Step 40 that the target braking/driving force Fvn and the target yaw moment Mvn cannot be attained through the control of the braking/driving forces of the wheels, the distribution ratio K is calculated at Step 60 by the neural network 50 in such a manner that, as the value indicating the condition of the acceleration or deceleration operation by a driver is great, the distribution ratio K becomes a small value, and as the value indicating the condition of the steering operation by a driver is great, the distribution ratio K becomes a great value. At Step 80, the straight line L, which is the closest to the point P indicating the vehicle target braking/driving force Fvn and the vehicle target yaw moment Mvn, is specified among the outer lines of the quadrangle 100. At Steps 90 and 100, the value of the coordinate at the target point R, which is the internally dividing point of the straight line L based upon the distribution ratio K, is calculated as the vehicle target braking/driving force Fvt after the modification and the vehicle target yaw moment Mvt after the modification.

Consequently, according to the illustrated first embodiment, when the vehicle is under the condition where the target braking/driving force Fvn and the target yaw moment Mvn cannot be achieved by the control of the braking/driving forces of the wheels, the distribution ratio K is calculated in such a manner that, as the value indicating the condition of the acceleration or deceleration operation by a driver is great, the distribution ratio K becomes a small value, and as the value indicating the condition of the steering operation by a driver is great, the distribution ratio K becomes a great value. Further, the straight line L, which is the closest to the point P indicating the vehicle target braking/driving force Fvn and the vehicle target yaw moment Mvn, is specified among the outer lines of the quadrangle 100. Then, the value of the coordinate at the target point R, which is the internally dividing point of the straight line L based upon the distribution ratio K, is calculated as the vehicle target braking/driving force Fvt after the modification and the vehicle target yaw moment Mvt after the modification. As a result, the braking/driving force and the yaw moment, which are as closer to the braking/driving force and the yaw moment required to the vehicle as possible and are suitable for the condition of a driving operation by a driver, can be achieved within the ranges of the braking/driving forces that can be generated by the wheels.

In particular, in the illustrated first embodiment, the driving sources for the wheels are electric motor generators 12FL to 12RR provided on each wheel. In case where the target braking/driving forces Fwxti of the wheels take negative values, which means the target braking/driving forces Fwxti are braking forces, the regenerative braking forces by the electric motor generators 12FL to 12RR are used. Accordingly, the vehicle motion energy can effectively be returned as electric energy upon the braking operation for deceleration, while achieving the braking/driving force and the yaw moment required to the vehicle as much as possible within the range of the braking/driving forces that can be generated by the wheels.

While, in the illustrated first embodiment, the electric motor generators 12FL to 12RR are in-wheel motors, the electric motor generators may be provided at the vehicle body. Further, the electric motor generators as driving sources for wheels may not perform regenerative braking. The driving source may be other than the electric motor generator so long as it can increase or decrease the driving force of each wheel independently. The same is true for a third embodiment described later.

Although the electric motor generators 12FL to 12RR are provided so as to correspond to four wheels in the illustrated first embodiment, this embodiment may be applied to a vehicle having driving sources provided only at the left and right front wheels or left and right rear wheels. In this case, the quadrangle 100 takes a form shown by 100' in FIG. 4C, and when the vehicle yaw moment in the leftward turning direction and the vehicle yaw moment in the rightward turning direction are the maximum values Mvlmax and Mvrmax respectively, the vehicle braking/driving force takes a negative value, which means that the vehicle braking/driving force is a braking force. The above-mentioned effects can also be achieved with this vehicle.

SECOND EMBODIMENT

FIG. 7 is a schematic block diagram showing a braking/driving force control apparatus applied to a four-wheel-drive vehicle in which driving force and regenerative braking force from a single electric motor generator, which is common to four wheels, are controlled so as to be distributed to front and rear wheels and right and left wheels according to a second embodiment of the present invention. The components in FIG. 7 same as those in FIG. 1 are identified by the same numerals in FIG. 1.

In this second embodiment, an electric motor generator 40 is provided that serves as a driving source common to the front left wheel 10FL, front right wheel 10FR, rear left wheel 10RL, and rear right wheel 10RR. The driving force or the regenerative braking force from the electric motor generator 40 is transmitted to a front-wheel propeller shaft 44 and rear-wheel propeller shaft 46 through a center differential 42 that can control the distribution ratio to the front wheels and rear wheels.

The driving force or the regenerative braking force of the front-wheel propeller shaft 44 is transmitted to the front-left wheel axle 50L and front-right wheel axle 50R by a front-wheel differential 48 that can control the distribution ratio to the front-left wheel and front-right wheel, whereby the front-left wheel 10FL and front-right wheel 10FR are rotatably driven. Similarly, the driving force or the regenerative braking force of the rear-wheel propeller shaft 46 is transmitted to the rear-left wheel axle 54L and rear-right wheel axle 54R by a rear-wheel differential 52 that can control the distribution ratio of the rear-left wheel and rear-right wheel, whereby the rear-left wheel 10RL and rear-right wheel 10RR are rotatably driven.

The driving force of the electric motor generator 40 is controlled by the electronic controller 16 for controlling driving force on the basis of the accelerator opening φ detected by the accelerator opening sensor 14. The regenerative braking force of the electric motor generator 40 is also controlled by the electronic controller 16 for controlling driving force. The electronic controller 16 for controlling driving force controls the distribution ratio of the driving force and regenerative braking force to the front wheels and rear wheels by the center differential 42, controls the distribution ratio of the driving force and regenerative braking force to the left wheels and right wheels by the front-wheel differential 48, and controls the distribution ratio of the driving force and regenerative braking force to the left wheels and right wheels by the rear-wheel differential 52.

In this second embodiment too, the electronic controller 16 for controlling driving force calculates, in the same manner as in the first embodiment, the target braking/driving force Fvn, required to the vehicle, through the control of the braking/driving force of each wheel, the vehicle target yaw moment Mvn, required to the vehicle, through the control of the braking/driving force of each wheel, the vehicle maximum driving force Fvdmax, the vehicle maximum braking force Fvbmax, the vehicle maximum yaw moment Mvlmax in the leftward turning direction, and the vehicle maximum yaw moment Mvrmax in the rightward turning direction by the braking/driving force of each wheel.

In the illustrated second embodiment, it is assumed that the driving forces Fwdi of the wheels when the maximum driving force of the electric motor generator 40 is uniformly distributed to the front-left wheel 10FL, front-right wheel 10FR, rear-left wheel 10RL and rear-right wheel 10RR is smaller than the producible maximum longitudinal force that is determined by the friction coefficient $\mu$ of the normal road surface.

As shown in FIG. 8A, the vehicle maximum driving force Fvdmax under the condition where the yaw moment by the braking/driving forces of the wheels is not acted on the vehicle is achieved when the braking/driving forces Fwxfl and Fwxfr of the front-left wheel 10FL and front-right wheel 10FR are the maximum driving forces Fwdflmax and Fwdfrmax in case where the distribution of the driving force to the right and left wheels is equal, and the braking/driving forces Fwxrl and Fwxrr of the rear-left wheel 10RL and rear-right wheel 10RR are the maximum driving forces Fwdrlmax and Fwdrrmax in case where the distribution of the driving force to the right and left wheels is equal.

Similarly, as shown in FIG. 8B, the vehicle maximum braking force Fvbmax under the condition where the yaw moment by the braking/driving force of the wheels is not acted on the vehicle is achieved when the braking/driving forces Fwxfl and Fwxfr of the front-left wheel 10FL and front-right wheel 10FR are the maximum braking forces Fwbflmax and Fwbfrmax in case where the distribution of the braking force to the right and left wheels is equal, and the braking/driving forces Fwxrl and Fwxrr of the rear-left wheel 10RL and rear-right wheel 10RR are the maximum braking forces Fwbrlmax and Fwbrrmax in case where the distribution of the braking force to the right and left wheels is equal.

As shown in FIG. 8C, the vehicle maximum yaw moment Mvlmax in the leftward turning direction under the condition where the longitudinal force by the braking/driving forces of the wheels is not acted on the vehicle is achieved in case where the driving force is distributed to the right wheels, the braking/driving forces Fwxfr and Fwxrr of the front-right wheel 10FR and rear-right wheel 10RR are the maximum driving forces Fwdfrmax' and Fwdrrmax', and their magnitudes are equal to the magnitudes of the maximum braking forces Fwbflmax and Fwbrlmax of the front-left wheel 10FL and rear-left wheel 10RL respectively.

As shown in FIG. 8D, the vehicle maximum yaw moment Mvlmax' in the leftward turning direction under the condition where the vehicle braking/driving force is the maximum driving force Fvdmax is achieved in case where the braking/driving forces Fwxfl and Fwxrl of the front-left wheel 10FL and rear-left wheel 10RL are respectively 0, and the braking/driving forces Fwxfr and Fwxrr of the front-right wheel 10FR and rear-right wheel 10RR are the maximum driving forces Fwdflmax' and Fwdrrmax'.

As shown in FIG. 9E, the vehicle maximum yaw moment Mvlmax" in the leftward turning direction under the condition where the driving force is not acted on any wheels is achieved in case where the braking/driving forces Fwxfr and Fwxrr of the front-right wheel 10FR and rear-right wheel 10RR are respectively 0, and the braking/driving forces Fwxfl and Fwxrl of the front-left wheel 10FL and rear-left wheel 10RL are the maximum braking forces Fwbflmax and Fwbrlmax.

As shown in FIG. 9F, the vehicle maximum yaw moment Mvrmax in the rightward turning direction under the condition where the longitudinal force by the braking/driving forces of the wheels is not acted on the vehicle is achieved in case where the driving force is distributed to the left wheels, the braking/driving forces Fwxfl and Fwxrl of the front-left wheel 10FL and rear-left wheel 10RL are the maximum driving forces Fwdflmax' and Fwdrlmax', and their magnitudes are equal to the magnitudes of the maximum braking forces Fwbfrmax and Fwbrrmax of the front-right wheel 10FR and rear-right wheel 10RR respectively.

As shown in FIG. 9G, the vehicle maximum yaw moment Mvrmax' in the rightward turning direction under the condition where the vehicle braking/driving force is the maximum driving force Fvdmax is achieved in case where the braking/driving forces Fwxfr and Fwxrr of the front-right wheel 10FR and rear-right wheel 10RR are respectively 0, and the braking/driving forces Fwxfl and Fwxrl of the front-left wheel 10FL and rear-left wheel 10RL are the maximum driving forces Fwdflmax' and Fwdrlmax'.

As shown in FIG. 9H, the vehicle maximum yaw moment Mvrmax" in the rightward turning direction under the condition where the driving force is not acted on any wheels is achieved in case where the braking/driving forces Fwxfl and Fwxrl of the front-left wheel 10FL and rear-left wheel 10RL are respectively 0, and the braking/driving forces Fwxfr and Fwxrr of the front-right wheel 10FR and rear-right wheel 10RR are the maximum braking forces Fwbfrmax and Fwbrrmax.

The maximum driving forces Fwdimax of the wheels are determined by the maximum output torque of the electric motor generator 40, the road friction coefficient $\mu$, and each distribution ratio, and the maximum braking forces Fwbimax of the wheels are determined by the road friction coefficient $\mu$. Therefore, the vehicle maximum driving force Fvdmax, vehicle maximum braking force Fvbmax, vehicle maximum yaw moment Mvlmax in the leftward turning direction, and vehicle maximum yaw moment Mvrmax in the rightward turning direction are also determined by the maximum output torque of the electric motor generator 40 and the road friction coefficient $\mu$. Accordingly, if the maximum output torque of the electric motor generator 40 and the road friction coefficient $\mu$ are found, the vehicle maximum driving force Fvdmax and the other values can be estimated.

As shown in FIG. 11A, in a rectangular coordinate with the vehicle braking/driving force Fvx as abscissa and the vehicle yaw moment Mv as ordinate, the vehicle braking/driving force Fvx and the vehicle yaw moment Mv that are attainable by the control of the braking/driving force of each wheel take values within a hexagon102 decided by the vehicle maximum driving force Fvdmax, vehicle maximum braking force Fvbmax, vehicle maximum yaw moment Mvlmax

in the leftward turning direction, vehicle maximum yaw moment Mvrmax in the rightward turning direction, and the variable range of the vehicle yaw moment Mv when vehicle braking/driving force Fvx are the maximum driving force Fvdmax or maximum braking force Fvbmax.

Notably, in FIG. 11, points A to H correspond to the cases A to H in FIGS. 8 and 9. As shown by a broken line in FIG. 11A, the hexagon 102 becomes small as the road friction coefficient μ decreases. Further, as the magnitude of the steering angle θ increases, the lateral force of front left and front right wheels, that are steerable wheels, increases, so that the allowance of the longitudinal force becomes small. Therefore, the hexagon 102 becomes small as magnitude of the steering angle θ increases.

When the output torque of the electric motor generator 40 is sufficiently great, the maximum driving force and maximum braking force of each wheel are determined by the road friction coefficient μ. Therefore, supposing that the vehicle accelerating direction and the vehicle leftward turning direction are defined as positive, the relationships between the maximum driving force and maximum braking force of each wheel, the vehicle maximum driving force and vehicle maximum braking force, and vehicle maximum yaw moment in the leftward turning direction and vehicle maximum yaw moment in the rightward turning direction are equal to those in the above-mentioned first embodiment. Accordingly, the range of the vehicle driving force and yaw moment that can be achieved by the braking/driving forces of the wheels becomes the range of the diamond like the first embodiment.

Further, when the output torque of the electric motor generator 40 and the maximum braking force of each wheel are smaller than those in the embodiment, the vehicle driving force becomes the maximum even if all the maximum driving force is distributed to the left wheels or right wheels, and the vehicle braking force becomes the maximum even if all the braking forces is distributed to the left wheels or right wheels. Therefore, as indicated by a phantom line in FIG. 11A, the range of the vehicle driving force and yaw moment that can be achieved by the braking/driving forces of the wheels becomes the range of the rectangle.

The coordinates at the points A to H shown in FIG. 11 are (Fvdmax, 0), (Fvbmax, 0), (0, Mvlmax), (Fvdmax, KmMvlmax), (Fvbmax, KmMvlmax), (0, Mvrmax), (Fvdmax, -KmMvlmax), and (Fvbmax, -KmMvlmax), respectively, supposing that the coefficient Km is defined as not less than 0 and not more than 1.

Supposing that the longitudinal distribution ratio of the braking/driving force Fwxi to the rear wheels is defined as Kr (constant of 0 < Kr < 1), the lateral distribution ratio of the braking/driving force Fwxi to the right wheels is defined as Ky (0 ≤ Kr ≤ 1) for the front wheels and rear wheels, and the vehicle tread is defined as Tr, the following equations 8 to 11 are established. Accordingly, the electronic controller 16 for controlling driving force sets the vehicle target braking/driving force Fvt and the vehicle target yaw moment Mvt after the modification by the control of the braking/driving force of each wheel to the target braking/driving force Fvn and the vehicle target yaw moment Mvn, when the vehicle target braking/driving force Fvt and the vehicle target yaw moment Mvt are within the above-mentioned hexagon 102. For example, it calculates the values satisfying the following equations 8 to 11 as the target braking/driving force Fwxti (i = fl, fr, rl, rr) and the lateral distribution ratio Ky to the right wheels by the least square method.

$$Fwxfl + Fwxfr + Fwxrl + Fwxrr = Fvt \qquad (8)$$

$$\{Fwxfr + Fwxrr - (Fwxfl + Fwxrl)\}Tr/2 = Mvt \qquad (9)$$

$$(Fwxfl + Fwxfr)Kr = (Fwxrl + Fwxrr)(1 - Kr) \qquad (10)$$

$$(Fwxfl + Fwxrl)Ky = (Fwxfr + Fwxrr)(1 - Ky) \qquad (11)$$

When the vehicle target braking/driving force Fvn and the vehicle target yaw moment Mvn are outside the range of the above-mentioned hexagon 102, the electronic controller 16 for controlling driving force determines whether or not the magnitude of the target yaw moment Mvn exceeds 0.5 Mvlmax. When the magnitude of the target yaw moment Mvn exceeds 0.5 Mvlmax, the electronic controller 16 for controlling driving force specifies a straight line L1, which is the closest to a point P1 indicating the vehicle target braking/driving force Fvn and the vehicle target yaw moment Mvn, in the area where the yaw moment is not less than 0.5 Mvlmax among the outer lines of the hexagon 102 as shown in FIG. 12. Then, the electronic controller 16 for controlling driving force calculates a distribution ratio K (a value greater than 0 and less than 1) for determining an internally dividing point Q1 of the straight line L in accordance with the operation of the neural network 50 shown in FIG. 6, whereby the electronic controller 16 for controlling driving force defines the braking/driving force Fv and the yaw moment Mv at the target point Q1 as the vehicle target braking/driving force Fvt after the modification and the vehicle target yaw moment Mvt after the modification, with the internally dividing point Q1 of the straight line L on the basis of the distribution ratio K employed as the target point.

When the magnitude of the target yaw moment Mvn is not more than 0.5 Mvlmax, the electronic controller 16 for controlling driving force specifies a straight line L2, which is the closest to a point P2 indicating the vehicle target braking/driving force Fvn and the vehicle target yaw moment Mvn, in the area where the yaw moment is not more than 0.5 Mvlmax among the outer lines of the hexagon 102 as shown in FIG. 13. Then, the electronic controller 16 for controlling driving force calculates a distribution ratio K for determining an internally dividing point Q2 of the straight line L in accordance with the operation of the neural network 50 shown in FIG. 6, whereby the electronic controller 16 for controlling driving force defines the braking/driving force Fv and the yaw moment Mv at the target point Q2 as the vehicle target braking/driving force Fvt after the modification and the vehicle target yaw moment Mvt after the modification, with the internally dividing point Q2 of the straight line L on the basis of the distribution ratio K employed as the target point. Then, the electronic controller 16 for controlling driving force calculates the values satisfying the foregoing equations 8 to 11 as the target braking/driving forces Fwxti of the wheels and the lateral distribution ratio Ky to the right wheels by the least square method, for example.

When the vehicle braking/driving force Fv takes a positive value which means the vehicle braking/driving force Fv is a driving force, and the target braking/driving forces Fwxti of the wheels are positive values that means the braking/ driving forces Fwxti are driving forces, the electronic controller 16 for controlling driving force sets the target friction braking forces Fwbti and the target regenerative braking forces Fwrti (i = fl, fr, rl, rr) of the wheels to zero, outputs the signals indicating the target friction braking forces Fwbti to the electronic controller 28 for controlling braking force, and sets the target driving forces Fwdti (i = fl, fr, rl, rr) of the wheels to the target braking/driving forces Fwxti.

Then, the electronic controller 16 for controlling driving force calculates the target driving current It to the electric motor generator 40 and the lateral distribution ratio Ky to the right wheels by unillustrated maps or functions on the basis of the target driving forces Fwdti, and controls the driving current applied to the electric motor generator 40 on the basis of the target driving current It as well as controls the front-wheel differential 48 and the rear-wheel differential 52 on the basis of the lateral distribution ratio Ky to the right wheels, thereby controlling the driving force of each wheel such that the braking/driving forces Fwxi of the wheels becomes the target braking/driving force Fwxti.

On the other hand, when the vehicle braking/driving force Fv takes a positive value that means the vehicle braking/driving force Fv is a driving force, but the target braking/driving force Fwxti of any one of wheels takes a negative value that means it is a braking force, and when the vehicle braking/driving force Fv takes a negative value that means it is a braking force, but the target braking/driving force Fwxti of any one of wheels takes a positive value that means it is a driving force, the electronic controller 16 for controlling driving force determines the lateral distribution ratio Ky to the right wheels such that the driving force is distributed only to the side where the target braking/driving forces Fwxti take positive values, calculates the target driving current It to the electric motor generator 40 on the basis of the sum of the positive target braking/driving forces Fwxti, and outputs signals indicating the target braking/driving forces Fwxti to the electronic controller 28 for controlling braking force such that the friction braking force by the friction braking device 18 is applied to the wheel having the negative target braking/driving force Fwxti.

Then, the electronic controller 16 for controlling driving force controls the driving current applied to the electric motor generator 40 on the basis of the target driving current It, and controls the front-wheel differential 48 and the rear-wheel differential 52 on the basis of the lateral distribution ratio Ky to the right wheels. The electronic controller 28 for controlling braking force applies the friction braking force according to the target braking/driving force Fwxti to the wheel having the negative target braking/driving force Fwxti. Accordingly, the braking/driving forces Fwxi of the wheels are controlled to coincide with the target braking/driving forces Fwxti.

When the sum of the target braking/driving forces Fwxti is not more than the maximum regenerative braking force by the electric motor generator 40 in case where the vehicle braking/driving force Fv takes a negative value that means it is a braking force, and the target braking/driving forces Fwxti of the wheels take negative values that means they are braking forces, the electronic controller 16 for controlling driving force sets the target driving forces Fwdti and the target friction braking forces Fwbti of the wheels to 0, and sets the target regenerative braking force Frt to the sum of the target braking/driving forces Fwxti, thereby controlling the lateral distribution ratio Ky to the right wheels and the electric motor generator 40 such that the regenerative braking force becomes the target regenerative braking force Frt.

When the magnitude of the target braking/driving force Fwxti of any one of wheels is greater than the maximum regenerative braking force by the electric motor generator 40 in case where the vehicle braking/driving force Fv takes a negative value that means it is a braking force, and the target braking/driving forces Fwxti of the wheels take negative values that means they are braking forces, the electronic controller 16 for controlling driving force sets the target driving forces Fwdti of the wheels to 0, sets the regenerative braking force by the electric motor generator 40 to the maximum regenerative braking force, and sets the lateral distribution ratio Ky to the right wheels such that the distribution ratio of the regenerative braking force to the wheel having the greater target braking/driving force Fwxti increases.

Then, the electronic controller 16 for controlling driving force calculates, as the target friction braking forces Fwbti, the values obtained by the subtraction from the target braking/driving forces Fwxti of the wheels the associated regenerative braking forces of the wheels, and outputs the signals indicating the target friction braking forces Fwbti to the electronic controller 28 for controlling braking force. Further, the electronic controller 16 for controlling driving force controls the electric motor generator 40 such that the regenerative braking force becomes the maximum regenerative braking force, and controls the front-wheel differential 48 and the rear-wheel differential 52 on the basis of the lateral distribution ratio Ky to the right wheels.

In this second embodiment too, the electronic controller 28 for controlling braking force calculates the target braking pressures Pbti (i = fl, fr, rl, rr) of the wheels on the basis of the target friction braking forces Fwbti of the wheels inputted from the electronic controller 16 for controlling driving force, and controls the hydraulic circuit 20 such that the braking pressures Pbi of the wheels becomes the associated target braking pressures Pbti, thereby controlling such that the friction braking forces Fwbi (i = fl, fr, rl, rr) of the wheels become the associated target friction braking forces Fwbti of the wheels.

The braking/driving force control in the second embodiment will now be explained with reference to the flowchart shown in FIG. 10. Steps in FIG. 10 same as Steps shown in FIG. 3 are identified by the same numbers. The control by the flowchart shown in FIG. 10 is started by the activation of the electronic controller 16 for controlling driving force, and it is repeatedly executed every predetermined time until an ignition switch, not shown, is turned off.

In this second embodiment, Steps 10 to 60 and Steps 200 to 220 are executed in the same manner as in the first embodiment. It is determined at Step 70, which is executed after Step 60, whether or not the absolute value of the target yaw moment exceeds 0.5 Mvlmax. When a negative determination is made, the program proceeds to Step 110, and when a positive determination is made, the program proceeds to Step 80.

At Steps 80 to 100, the processes same as those at Steps 80 to 100 in the above-described first embodiment are executed, except that the point P is the point P1, the straight line L is the straight line L1, and the internally dividing point R of the straight line L based upon the distribution ratio K is the internally dividing point R1 of the straight line L1 based upon the distribution ratio K. The ends Q1 and Q1 are the points C and D, respectively when the point P is in the first quadrant in FIG. 11, the points C and E, respectively when the point P is in the second quadrant in FIG. 11, the points F and H, respectively when the point P is in the third quadrant in FIG. 11, and the points F and G, respectively when the point P is in the fourth quadrant in FIG. 11.

At Step 110, a straight line L2, which is the closest to a point P2 indicating the vehicle target braking/driving force Fvn and the vehicle target yaw moment Mvn, is specified among the outer lines of the hexagon 102 as shown in FIG. 13. The straight line L2 is specified to be the segment AD when the point P is in the first quadrant in FIG. 11, the segment BE when the point P is in the second quadrant in FIG. 11, the segment BH when the point P is in the third quadrant in FIG. 11, and the segment AGwhen the point P is in the fourth quadrant in FIG. 11.

The coordinate at the end Q1 of the straight line L2 where the magnitude of the yaw moment is greater is defined as (Fvmax, 0.5Mvmax), and the coordinate at the end Q2 where the magnitude of the yaw moment is smaller is defined as (Fvmax, 0). At Step 120, the vector component (Zx1 Zy1) from the point P to the end Q1 and the vector component (Zx2 Zy2) from the point P to the end Q2 are calculated in accordance with the following equations 12 and 13, respectively.

$$(Zx1\ Zy1) = (Fvmax - Fvn \quad 0.5Mvmax - Mvn) \qquad (12)$$

$$(Zx2\ Zy2) = (Fvmax - Fvn \quad -Mvn) \qquad (13)$$

The ends Q1 and Q2 are the points D and A, respectively when the point P is in the first quadrant in FIG. 11, the points E and B, respectively when the point P is in the second quadrant in FIG. 11, the points H and B, respectively when the point P is in the third quadrant in FIG. 11, and the points G and A, respectively when the point P is in the fourth quadrant in FIG. 11. Further, Mvmax is Mvlmax when the point P is in the first or second quadrant in FIG. 11, while Mvmax is Mvrmax when the point P is in the third or fourth quadrant in FIG. 11.

At Step 130, the vehicle target braking/driving force Fvt after the modification and the vehicle target yaw moment Mvt after the modification are calculated as the value of the coordinate at the target point R2, which is the internally dividing point of the straight line L2 based upon the distribution ratio K, in accordance with the equations 14 and 15 described below. Thereafter, the program proceeds to Step 200.

$$Fvt = Fvn + K (Fvmax - Fvn) + (1 - K) (-Mvn) \qquad (14)$$

$$Mvt = Mvn + K (Fvmax - Fvn) + (1 - K) (0.5Mvmax - Mvn) \qquad (15)$$

The control same as that in the above-mentioned first embodiment is executed at Step 210 in this second embodiment, except that the target regenerative braking force Frt and the target friction braking forces Fwbti of the wheels are calculated as described above.

Thus, according to the illustrated second embodiment, when the target braking/driving force Fvn and the target yaw moment Mvn cannot be achieved by the control of the braking/driving forces of the wheels, Steps 70 to 130 are executed, whereby the straight line L1 or L2, which is the closest to the point P1 or P2 indicating the vehicle target braking/driving force Fvn and the vehicle target yaw moment Mvn, is specified among the outer lines of the hexagon 102. Then, the value of the coordinate at the target point R1 or R2, which is the internally dividing point of the straight line L1 or L2 based upon the distribution ratio K, is calculated as the vehicle target braking/driving force Fvt after the modification and the vehicle target yaw moment Mvt after the modification.

Consequently, according to the illustrated second embodiment, when the vehicle, in which right and left wheels are braked and driven by an electric motor generator common to these wheels, and driving force and regenerative braking force are controlled so as to be distributed to I right and left wheels, is under the condition where the target braking/driving force Fvn and the target yaw moment Mvn cannot be achieved by the control of the braking/driving forces of the wheels, the braking/driving force and the yaw moment, which is as closer to the braking/driving force and the yaw moment required to the vehicle as possible and is suitable for the condition of a driving operation by a driver, can be achieved within the ranges of the braking/driving forces that can be generated by the wheels.

According to the illustrated second embodiment, in particular, the electric motor generator 40 that is common to all the wheels and serves as a driving source generates a regenerative braking force, in case where the vehicle target braking/driving force Fvt takes a negative value that means it is a braking force. Therefore, like the above-mentioned first embodiment, the vehicle motion energy can effectively be returned as electric energy upon the braking operation for deceleration, while achieving the braking/driving force and the yaw moment required to the vehicle as much as possible within the range of the braking/driving force that can be generated by each wheel.

According to the illustrated first and second embodiments, the vehicle target longitudinal acceleration Gxt is calculated on the basis of the accelerator opening $\phi$ and the master cylinder pressure Pm that indicate the amount of acceleration or deceleration operation by a driver, the vehicle target yaw rate $\gamma$t is calculated on the basis of the steering angle $\theta$, which is a steering operation amount by a driver, and the vehicle speed V, the target barking/driving force Fvn required to the vehicle is calculated on the basis of the vehicle target longitudinal acceleration Gxt, and the target total yaw moment Mvnt required to the vehicle is calculated on the basis of the vehicle target yaw moment $\gamma$t.

The vehicle turning yaw moment Ms by the lateral force of each wheel is calculated, and the value obtained by subtracting the turning yaw moment Ms from the vehicle target total yaw moment Mvnt is calculated as the vehicle target yaw moment Mvn, which is required to the vehicle and is to be attained by the control of the braking/driving force of each wheel. Therefore, the vehicle target yaw moment required to the vehicle to be attained by the control of the braking/driving force of each wheel can be surely and correctly calculated in just proportion, compared to the case where the vehicle turning yaw moment Ms attained by the lateral forces of the wheels is not considered.

Although the driving source is the electric motor generator 40 that is common to four wheels in the illustrated second embodiment, the driving source for driving the wheels so as to execute the control of the driving force distribution between left and right wheels may be optional driving means known by a person skilled in the art, such as an internal combustion engine, hybrid system, or the like. The same is true for a fourth embodiment described later.

Although a single electric motor generator 40 is provided as a common driving source to four wheels in the illustrated second embodiment, a driving source common to the front-left wheel and front-right wheel and a driving source common to the rear-left wheel and rear-right wheel may be provided. Further, a driving source common to only the front-left wheel and front-right wheel or a driving source common to only the rear-left wheel and rear-right wheel may be provided. In this case, the hexagon 102 takes a shape 102' shown in FIG. 11B. Specifically, when the vehicle yaw moment in the leftward turning direction and the vehicle yaw moment in the rightward turning direction are the maximum values Mvlmax and Mvrmax respectively, the vehicle braking/driving force takes a negative value, which means that the vehicle braking/driving force is a braking force. The above-mentioned effects can also be achieved by this vehicle. The same is true for the later-described fourth embodiment.

THIRD EMBODIMENT

FIG. 14 is a flowchart showing an main part of a braking/driving force control routine in a third embodiment of a vehicle braking/driving force control apparatus that is applied to a four-wheel-drive vehicle of a wheel-in-motor type and is made as an modified example of the first embodiment. Steps in FIG. 14 same as Steps shown in FIG. 3 are identified by the same numbers in FIG. 3.

In this third embodiment, the areas which are between straight lines perpendicular to the straight lines at both sides of the apexes A to D of the outer lines of the quadrangle 100, which indicates the range of the vehicle braking/driving force Fvx and the vehicle yaw moment Mv that are attainable through the control of the braking/driving forces of the wheels, are defined as S1 to S4 as shown in FIG. 15. When the vehicle target braking/driving force Fvn and the vehicle target yaw moment Mvn are in one of the areas S1 to S4, the braking/driving force Fv and the yaw moment Mv at the target point R are not defined as the vehicle target braking/driving force Fvt after the modification and the vehicle target yaw moment Mvt after the modification with the internally dividing point R of the straight line L based upon the distribution ratio K employed as the target point, but the values of the corresponding apex are defined as the vehicle target braking/driving force Fvt after the modification and the vehicle target yaw moment Mvt after the modification.

Accordingly, as shown in FIG. 14, at Step 51 that is executed before Step 60, it is determined whether or not the vehicle target braking/driving force Fvn and the vehicle target yaw moment Mvn are in the non-distribution area, i.e., one of the areas S1 to S4. When a negative determination is made, the program proceeds to Step 60, while when a positive determination is made, the program proceeds to Step 52.

At Step 52, it is determined whether or not the absolute value of the vehicle target braking/driving force Fvn is greater than the vehicle maximum driving force Fvdmax. When a negative determination is made, the vehicle target braking/driving force Fvt after the modification is set to 0, and the vehicle target yaw moment Mvt is set to Mvmax at Step 53. When a positive determination is made, the target braking/driving force Fvt after the modification is set to Fvmax, and the vehicle target yaw moment Mvt after the modification is set to 0. In this case, Mvmax is set to Mvlmax when the vehicle target yaw moment Mvn assumes a positive value, while it is set to Mvrmax when the vehicle target yaw moment assumes a negative value. Further, Fvmax is set to Fvdmax when the vehicle target braking/driving force Fvn assumes a positive value, while it is set to Fvbmax when the vehicle target braking/driving force Fvn assumes a negative value.

Thus, according to the illustrated third embodiment, the operation and effect similar to those in the first embodiment can be obtained, and additionally, under the condition where the magnitude of the vehicle target braking/driving force Fvn and/or the magnitude of the vehicle target yaw moment Mvn is great, the driving force and yaw moment required to the vehicle can surely be achieved compared to the above-described first embodiment.

FOURTH EMBODIMENT

FIG. 16 is a flowchart showing an main part of a braking/driving force control routine in a fourth embodiment of a vehicle braking/driving force control apparatus that is applied to a four-wheel-drive vehicle, in which driving force and regenerative braking force from a single electric motor generator that is common to four wheels are controlled so as to be distributed to front and rear wheels and right and left wheels and is made as an modified example of the second embodiment. Steps in FIG. 16 same as Steps shown in FIG. 14 are identified by the same numbers in FIG. 14.

In this fourth embodiment, the areas which are between straight lines perpendicular to the straight lines at both sides of the apexes A to H of the outer lines of the hexagon 102, which indicates the range of the vehicle braking/driving force Fvx and the vehicle yaw moment Mv that are attainable through the control of the braking/driving forces of the wheels, are defined as S1 to S6 as shown in FIG. 17. When the vehicle target braking/driving force Fvn and the vehicle target yaw moment Mvn are in one of the areas S1 to S6, the braking/driving force Fv and the yaw moment Mv at the target point R1 or R2 are not defined as the vehicle target braking/driving force Fvt after the modification and the vehicle target yaw moment Mvt after the modification with the internally dividing point R1 or R2 of the straight line L1 or L2 based upon the distribution ratio K employed as the target point, but the values of the corresponding apex are defined as the vehicle target braking/driving force Fvt after the modification and the vehicle target yaw moment Mvt after the modification.

Accordingly, as shown in FIG. 16, at Step 51 that is executed before Step 60, it is determined whether or not the vehicle target braking/driving force Fvn and the vehicle target yaw moment Mvn are in the non-distribution area, i.e., one of the areas S1 to S6. When a negative determination is made, the program proceeds to Step 60, while when a positive determination is made, the program proceeds to Step 52.

Step 52 and Step 53 are executed in the same manner as in the third embodiment. When a positive determination is made at Step 52, the vehicle target braking/driving force Fvt after the modification is set to Fvmax, and the vehicle target yaw moment Mvt is set to 0.5Mvmax at Step 55. In this case, Mvmax is set to Mvlmax when the vehicle target yaw moment Mvn assumes a positive value, while it is set to Mvrmax when the vehicle target yaw moment assumes a negative value. Further, Fvmax is set to Fvdmax when the vehicle target braking/driving force Fvn assumes a positive value, while it is set to Fvbmax when the vehicle target braking/driving force Fvn assumes a negative value.

Thus, according to the illustrated fourth embodiment, the operation and effect similar to those in the second embodiment can be obtained, and additionally, like the above-described third embodiment, under the condition where the magnitude of the vehicle target braking/driving force Fvn or the magnitude of the vehicle target yaw moment Mvn is great, the driving force and yaw moment required to the vehicle can surely be achieved compared to the above-described second embodiment.

The present invention is explained in detail with respect to specific embodiments, but the invention is not limited to the above-mentioned embodiments. It would be apparent for a person skilled in the art that various other modifications are possible within the scope of the present invention.

For example, although the regenerative braking force is generated according to need by the electric motor generators 12FL to 12RR and the electric motor generator 40 in the aforesaid first to fourth embodiments, it may be revised such that the regenerative braking is not performed, even if the driving source is an electric motor generator, and the braking force is generated only by the friction braking.

The longitudinal distribution ratio Kr of the braking/driving force to the rear wheels is constant in the aforesaid first to fourth embodiments. However, the longitudinal distribution ratio Kr to the rear wheels may be variably set in accordance with the magnitude of the steering angle such that the longitudinal distribution ratio Kr to the rear wheels gradually increases as the magnitude of the steering angle increases, since in general, the lateral force of the steerable wheel increases and the allowable longitudinal force of the steerable wheel decreases as the magnitude of the steering angle increases.

In general, as the braking forces of the rear wheels increase upon the braking of the vehicle for deceleration, the lateral force of the rear wheels decreases to thereby deteriorate the running stability of the vehicle. Therefore, the longitudinal distribution ratio Kr to the rear wheels may be variably set in accordance with the vehicle target braking/driving force such that it decreases as the vehicle target braking/driving force takes a negative value and its magnitude is greater.

In the above-described first to fourth embodiments, when the vehicle target braking/driving force Fvn and/or the vehicle target yaw moment Mvn are outside the range of the quadrangle 100 or hexagon 102 indicating the vehicle target braking/driving force Fvn and the vehicle target yaw moment Mvn that are attainable by the braking/driving forces of the wheels, the straight line L closest to the point P indicating the vehicle target braking/driving force Fvn and the vehicle target yaw moment Mvn is specified among the outer lines. The internally dividing point R on the basis of the distribution ratio K is obtained to the whole of the straight line L. The value at the internally dividing point R is defined as the vehicle target braking/driving force Fvt after the modification and the vehicle target yaw moment Mvt after the modification. However, as shown in FIG. 18, for example, when the magnitude of the vehicle target braking/driving force Fvn or the magnitude of the vehicle target yaw moment Mvn exceeds the maximum value Fvmax of the braking/driving force and the maximum value Mvmax of the yaw moment respectively, the straight line L may be specified for the range that is not more than the magnitude of the vehicle target braking/driving force Fvn or the magnitude of the vehicle target yaw moment, and the internally dividing point R based upon the distribution ratio K may be obtained for the straight line L.

In the aforesaid first to fourth embodiments, the target braking/driving force Fvn and the target yaw moment Mvn by the control of the braking/driving force of each wheel required to the vehicle are calculated on the basis of the amount of the acceleration or deceleration operation and the amount of the steering operation by the driver. However, in case where the vehicle behavior is unstable, the target braking/driving force Fvn and the target yaw moment Mvn may be corrected so as to be calculated by considering the target longitudinal acceleration or target yaw rate, which are required to stabilize the behavior of the vehicle, in addition to the amount of the acceleration or deceleration operation and the amount of the steering operation by the driver.

**Claims**

1. A vehicle braking/driving force control apparatus comprising:

braking/driving force applying means that can apply braking/driving forces to wheels;
means for detecting an amount of driving operation by an occupant;
means for calculating a vehicle target braking/driving force and a vehicle target yaw moment, which should be generated by the braking/driving forces of the wheels, on the basis of at least the amount of the driving operation by the occupant; and
control means for controlling the braking/driving force applied to each wheel by the braking/driving force applying means such that, when said vehicle target braking/driving force and/or said vehicle target yaw moment cannot be achieved by the braking/driving forces of the wheels, said target braking/driving force and/or said target yaw moment is modified to be increased or decreased to take values attainable by the braking/driving forces of the wheels, and the vehicle braking/driving force and the yaw moment by the braking/driving forces of the wheels become said target braking/driving force after the modification and said target yaw moment after the modification,

wherein said control means is configured to determine a ratio of the modification to said target braking/driving force and said target yaw moment on the basis of a condition of a driving operation by a driver.

2. A vehicle braking/driving force control apparatus according to claim 1, wherein
said control means modifies to decrease said target braking/driving force and/or said target yaw moment such that the target braking/driving force after the modification and the target yaw moment after the modification become the values attainable by the braking/driving forces of the wheels.

3. A vehicle braking/driving force control apparatus according to claim 1, wherein
said control means determines a straight line, which is the closest to a point indicating said target braking/driving force and said target yaw moment, among lines indicating the maximum values of the magnitude of the vehicle braking/driving force and the magnitude of the vehicle yaw moment by the braking/driving forces of the wheels, in a rectangular coordinate with the vehicle braking/driving force and the vehicle yaw moment as coordinate axis, sets the value at the target point as said target braking/driving force after the modification and said target yaw moment after the modification with an internally dividing point of said straight line defined as said target point, and determines the ratio of the interior division of said straight line on the basis of the condition of the driving operation by a driver.

4. A vehicle braking/driving force control apparatus according to any one of claims 1 to 3, wherein
said control means defines, as the target point, the internally dividing point of said straight line within the range where the magnitude of the braking/driving force is not more than said target braking/driving force, when the magnitude of said target braking/driving force exceeds the maximum value of the braking/driving force attainable by the braking/driving forces of the wheels.

5. A vehicle braking/driving force control apparatus according to any one of claims 1 to 4, wherein
said control means defines, as the target point, the internally dividing point of said the straight line within the range where the magnitude of the yaw moment is not more than said target yaw moment, when the magnitude of said target yaw moment exceeds the maximum value of the yaw moment attainable by the braking/driving forces of the wheels.

6. A vehicle braking/driving force control apparatus according to any one of claims 1 to 5, wherein
said condition of the driving operation by a driver is a condition of an acceleration or deceleration operation, and a condition of a steering operation.

7. A vehicle braking/driving force control apparatus according to any one of claims 1 to 6, wherein
said control means determines the ratio of the modification by using a neural network to which a value indicating said condition of the driving operation by a driver is inputted.

8. A vehicle braking/driving force control apparatus according to any one of claims 1 to 7, wherein
said means for calculating a vehicle target braking/driving force and a vehicle target yaw moment calculates said vehicle target braking/driving force and vehicle target total yaw moment for causing the vehicle to stably run on the basis of at least the amount of the driving operation by an occupant, estimates a vehicle turning yaw moment due to a lateral force of each wheel on the basis of at least the amount of the driving operation by the occupant, and calculates said vehicle target yaw moment by subtracting said turning yaw moment from said target total yaw moment.

9. A vehicle braking/driving force control apparatus according to any one of claims 1 to 8, wherein
said lines indicating the greatest values of said vehicle braking/driving force and said vehicle yaw moment are determined by the greatest value of the vehicle driving force, the greatest value of the vehicle braking force, the greatest value of the vehicle yaw moment in the leftward turning direction and the greatest value of the vehicle yaw moment in the rightward turning direction.

10. A vehicle braking/driving force control apparatus according to any one of claims 1 to 9, wherein
said lines indicating the greatest values of said vehicle braking/driving force and said vehicle yaw moment are variably set in accordance with a road friction coefficient.

11. A vehicle braking/driving force control apparatus according to any one of claims 6 to 10, wherein
said condition of the acceleration or deceleration operation is determined on the basis of the amount of the acceleration operation, the rate of change of the amount of the acceleration operation, the amount of braking operation, and the rate of change of the amount of the braking operation.

12. A vehicle braking/driving force control apparatus according to any one of claims 6 to 11, wherein said condition of the steering operation is determined on the basis of the amount of the steering operation and the rate of change of the amount of the steering operation.

13. A vehicle braking/driving force control apparatus according to any one of claims 6 to 12, wherein said means for calculating the vehicle target braking/driving force and the vehicle target yaw moment calculates a vehicle target longitudinal acceleration and a vehicle target yaw rate for stably running the vehicle on the basis of at least the amount of the driving operation by an occupant, and calculates said vehicle target driving/braking force and the vehicle target total yaw moment on the basis of said vehicle target longitudinal acceleration and said vehicle target yaw rate, respectively.

14. A vehicle braking/driving force control apparatus according to any one of claims 6 to 13, wherein said control means calculates the target braking/driving force of each wheel on the basis of said vehicle target braking/driving force, said vehicle target yaw moment, and the distribution ratio of the braking/driving force to the front and rear wheels, and controls the braking/driving force applied to each wheel on the basis of the target braking/ driving force of each wheel.

# FIG.1

# FIG.2A

# FIG.2B

# FIG.2C

# FIG.2D

# FIG.3

```
              ( Start )
S10             ↓
        ┌──────────────────┐
        │ Reading signal   │
        └──────────────────┘
S20             ↓
  ┌─────────────────────────────────────────┐
  │ Calculating target braking/             │
  │ driving force Fvn and target yaw moment Mvn │
  └─────────────────────────────────────────┘
S30             ↓
  ┌──────────────────────────────────────────────────┐
  │ Calculating maximum driving force Fvdmax, maximum braking │
  │ force Fvbmax, maximum yaw moments Mvlmax, Mvrmax  │
  └──────────────────────────────────────────────────┘
S40             ↓
     ⟨ Are Fvn and Fvdmax        ⟩ No
     ⟨ within attainable range?  ⟩ ──────┐
                ↓ Yes                      │
                                  S60      ↓
                           ┌──────────────────────┐
                           │ Calculating distribution │
                           │ ratio K(FIG.6)       │
                           └──────────────────────┘
                                  S80      ↓
                           ┌──────────────────────┐
                           │ Specifying straight  │
                           │ line L(FIG.5)        │
                           └──────────────────────┘
                                  S90      ↓
                           ┌──────────────────────┐
                           │ Calculating vector   │
                           │ components Zx,Zy(FIG.5) │
                           └──────────────────────┘
S50             ↓            S100     ↓
        ┌──────────────┐   ┌──────────────────────────┐
        │ Fvt=Fvn      │   │ Calculating target braking/driving │
        │ Mvt=Mvn      │   │ force Fvt and target yaw moment Mvt │
        └──────────────┘   │ after modification(FIG.5) │
                           └──────────────────────────┘
S200            ↓ ←──────────────┘
  ┌──────────────────────────┐
  │ Calculating target braking/ │
  │ driving forces Fwxti of wheels │
  └──────────────────────────┘
S210            ↓
  ┌──────────────────────────┐
  │ Outputting target friction │
  │ braking forces Fwbti of wheels │
  └──────────────────────────┘
S220            ↓
  ┌──────────────────────────┐
  │ Executing braking/       │
  │ driving force control    │
  └──────────────────────────┘
                ↓
           ( Return )
```

# FIG.4A

# FIG.4B

# FIG.5

# FIG.6

Acceleration opening $\phi$ →

Rate of change $\phi$d of
acceleration opening →

Master cylinder
pressure Pm →

Rate of change Pmd of
master cylinder pressure →

Steering angle $\theta$ →

Rate of change $\theta$d
of steering angle →

distribution
ratio K

50

# FIG.7

# FIG.8A

Fwdflmax    Fwdfrmax

10FL

10FR

Fvdmax

Fwdrlmax

Fwdrrmax

10RL

10RR

# FIG.8B

10FL

Fwbflmax

10FR

Fwbfrmax

Fvbmax

10RL

10RR

Fwbrlmax

Fwbrrmax

# FIG.8C

Fwdfrmax'

10FL

Fwbflmax

10FR

Mvlmax

Fwdrrmax'

10RL

10RR

Fwbrlmax

# FIG.8D

Fwdfrmax'

10FL

10FR

Fvdmax

Mvlmax'

Fwdrrmax'

10RL

10RR

# FIG.9E

# FIG.9F

# FIG.9G

# FIG.9H

# FIG.10

S60
Calculating distribution
ratio K (FIG. 6)

S70
| Mvn | >
0. 5Mvlmax ? —— No

Yes

S80
Specifying straight
line L1 (FIG. 12)

S90
Calculating vector
components Zx, Zy (FIG. 12)

S100
Calculating target braking/
driving force Fvt and target
yaw moment Mvt after
modification (FIG. 12)

S110
Specifying straight
line L2 (FIG. 13)

S120
Calculating vector
components Zx, Zy (FIG. 13)

S130
Calculating target braking/
driving force Fvt and target
yaw moment Mvt after
modification (FIG. 13)

To S200

# FIG.11A

# FIG.11B

# FIG.12

# FIG.13

# FIG.14

S51 〈In non-distribution area?〉 —Yes→

No ↓

S60 | Calculating distribution ratio K(FIG.6)

↓

S80 | Specifying straight line L(FIG.5)

↓

S90 | Calculating vector components Zx, Zy(FIG.5)

↓

S100 | Calculating target braking/driving force Fvt and target yaw moment Mvt after modification(FIG.5)

S52 〈 | Fvn | > Fvdmax ? 〉 —Yes→

No ↓

S53 | Fvt = 0
Mvt = Mvmax

S54 | Fvt = Fvmax
Mvt = 0

( To S200 )

# FIG.15

# FIG.16

S51

In non-distribution area? —Yes→

S60 ↓No

Calculating distribution ratio K(FIG. 6)

S70

S130

To S200

S52

|Fvn| > Fvdmax? —Yes→

S53 ↓No

Fvt=0
Mvt=Mvmax

S55

Fvt=Fvmax
Mvt=0.5Mvmax

# FIG.17

# FIG.18

## INTERNATIONAL SEARCH REPORT

| | International application No. |
|---|---|
| | PCT/JP2006/304022 |

A. CLASSIFICATION OF SUBJECT MATTER
*B60T8/1755*(2006.01), *B60W10/04*(2006.01), *B60W10/08*(2006.01), *B60W10/18*(2006.01), *B60W30/02*(2006.01)

According to International Patent Classification (IPC) or to both national classification and IPC

B. FIELDS SEARCHED

Minimum documentation searched (classification system followed by classification symbols)
*B60T8/1755*(2006.01), *B60W10/04*(2006.01), *B60W10/08*(2006.01), *B60W10/18*(2006.01), *B60W30/02*(2006.01)

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-190832 A (Toyota Motor Corp.), 11 July, 2000 (11.07.00), Full text; all drawings (Family: none) | 1-14 |
| Y | JP 8-310366 A (Toyota Motor Corp.), 26 November, 1996 (26.11.96), Claims; Par. Nos. [0027] to [0034]; Figs. 9, 11 & US 5702165 A & DE 19619476 A | 1-14 |
| Y | JP 2000-344077 A (Toyota Motor Corp.), 12 December, 2000 (12.12.00), Full text; all drawings & EP 1059216 A2 | 1-14 |

☒ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April, 2006 (05.04.06) | 18 April, 2006 (18.04.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

35

**INTERNATIONAL SEARCH REPORT**

| International application No. |
| --- |
| PCT/JP2006/304022 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-046589 A  (Toyota Motor Corp.),<br>12 February, 2002 (12.02.02),<br>Full text; all drawings<br>& EP 1179464 A2          & US 2002/14799 A1 | 1-14 |
| Y | JP 2002-178904 A  (Toyota Motor Corp.),<br>26 June, 2002 (26.06.02),<br>Full text; all drawings<br>& EP 1215097 A2          & US 2002/75139 A1 | 1-14 |
| Y | JP 2000-168525 A  (Toyota Motor Corp.),<br>20 June, 2000 (20.06.00),<br>Par. No. [0025]<br>(Family: none) | 7 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

* JP HE19309357 A